# EUROPÄISCHE PATENTANMELDUNG

(11) **EP 2 460 641 A1**
(43) Veröffentlichungstag der Anmeldung: **06.06.2012**
(21) Anmeldenummer: 11174945.3
(22) Anmeldetag: 21.07.2011
(51) Int. Cl.: B29C 53/28, B31D 3/02, B31D 3/00, B29C 65/02, B29C 65/18, B29C 65/32, B29C 65/48, B29C 65/78, B29L 31/60, B32B 37/14, H05B 6/10, E04C 2/36, B29D 24/00, B29D 99/00

(54) **Verfahren zur Herstellung eines duroplastischen halbwabenförmigen Streifens aus einem Fasermaterial sowie duroplastische Wabenstruktur**

(30) Priorität: 10.06.2011 EP 11169384; 03.12.2010 WO PCT/EP2010/068901
(71) Anmelder: The Swisscore AG, 8212 Neuhausen am Rheinfall (CH)
(72) Erfinder: Brinkhaus, Bernhard, 8955 Oetwil a. d. Limmat (CH); Müller, Georges, 8212 Neuhausen am Rheinfall (CH); Job, Dominik Jaromir, 8625 Gossau (CH)
(74) Vertreter: Dr. Graf & Partner AG

(57) **Zusammenfassung**

Verfahren zur Herstellung eines duroplastischen, halbwabenförmigen Streifens (2e) aus einem Streifenmaterial (2), wobei das Streifenmaterial (2) im Wesentlichen aus einem Fasermaterial, insbesondere aus einer Papierbahn besteht, welches mit einem zu einem Duroplast vernetzenden Bindemittel vorimprägniert ist, wobei das Streifenmaterial (2) kontinuierlich gefördert wird und dabei erwärmt wird und einem Druck ausgesetzt wird, um eine Kondensationsreaktion zu bewirken, wobei über eine Abrollbewegung ein derartiger Druck auf das kontinuierlich geförderte Streifenmaterial (2) ausgeübt wird, dass das Bindemittel in das Streifenmaterial (2) hinein gepresst wird, und dass während der Polykondensation frei gesetzte Kondensationsprodukte aus dem Streifenmaterial (2) hinaus gepresst werden, indem das Streifenmaterial (2) zwischen zwei ineinander greifenden, beheizten, gegenseitig abrollenden Prägerädern (4a,4b) hindurchgeführt wird, sodass das Streifenmaterial (2) durch die Prägeräder (4a,4b) erwärmt wird, dem Druck ausgesetzt wird und zugleich zu einem halbwabenförmigen Streifen (2e) geformt wird.

## Beschreibung

Die Erfindung betrifft ein Verfahren zur Herstellung eines duroplastischen, halbwabenförmigen Streifens gemäss dem Oberbegriff von Anspruch 1. Die Erfindung betrifft weiter ein Verfahren zur Herstellung einer duroplastischen Wabenstruktur gemäss dem Oberbegriff von Anspruch 13. Die Erfindung betrifft weiter eine duroplastische Wabenstruktur gemäss dem Oberbegriff von Anspruch 15.

### Stand der Technik

Es ist bekannt wabenförmige Kernmaterialien beziehungsweise Wabenstrukturen aus duroplastischen Verbundwerkstoffen herzustellen. Solche Wabenstrukturen werden zum Beispiel bei der Herstellung von Konstruktionselementen wie Türen, Böden, Seitenwänden oder Deckenwänden verwendet. Üblicherweise wird das wabenförmige Kernmaterial einseitig oder beidseitig mit einer Deckschicht verbunden, um derart ein plattenförmiges Konstruktionselement zu bilden. Die Waben sind als sechseckige Waben ausgestaltet, welche auch als honigwabenförmige Waben bezeichnet werden.

Die Druckschrift DE 3520046 A1 offenbart ein Herstellungsverfahren von mit Phenolharz behandelten Wabenstrukturen aus miteinander verklebten Papierbahnen. Dabei werden in einem ersten Verfahrensschritt Papierbahnen mit Klebestreifen versehen und miteinander verpresst. In einem nachfolgenden Verfahrensschritt werden die miteinander verklebten Papierbahnen zur Ausbildung von Wabenstrukturen auseinander gezogen. In einem nachfolgenden Verfahrensschritt wird die Wabenstruktur zur Fixierung wiederholt in ein Phenolharz-Lösungsmittelgemisch getaucht und anschliessend in einem Ofen getrocknet bzw. ausgehärtet, um derart eine duroplastische Wabenstruktur auszubilden. Dieses Herstellungsverfahren weist den Nachteil auf, dass es sehr aufwendig und entsprechend teuer ist.

### Darstellung der Erfindung

Aufgabe der Erfindung ist es wirtschaftlich vorteilhaftere duroplastische Wabenstrukturen und Vorprodukte für duroplastische Wabenstrukturen zu bilden, die insbesondere kostengünstig herstellbar sind, eine erhöhte Stabilität aufweisen, und die vorzugsweise die Herstellung von vorteilhafteren Leichtbauwänden ermöglichen.

Diese Aufgabe wird gelöst mit einem Verfahren zur Herstellung eines duroplastischen, halbwabenförmigen Streifens aufweisend die Merkmale von Anspruch 1.

Die Unteransprüche 2 bis 12 betreffen weitere, vorteilhafte Verfahrensschritte.

Die Aufgabe wird insbesondere gelöst mit einem Verfahren zur Herstellung eines duroplastischen, halbwabenförmigen Streifens aus einem Streifenmaterial, wobei das Streifenmaterial im Wesentlichen aus einem Fasermaterial besteht, insbesondere aus einer Papierbahn, welche mit einem zu einem Duroplast vernetzenden Bindemittel vorimprägniert ist, wobei das Streifenmaterial kontinuierlich gefördert wird und dabei erwärmt wird und einem Druck ausgesetzt wird, um eine Kondensationsreaktion zu bewirken, wobei über eine Abrollbewegung ein derartiger Druck auf das kontinuierlich geförderte Streifenmaterial ausgeübt wird, dass das Bindemittel in das Streifenmaterial hinein gepresst wird, und dass während der Polykondensation frei gesetzte Kondensationsprodukte aus dem Streifenmaterial hinaus gepresst werden, indem das Streifenmaterial zwischen zwei ineinander greifenden, beheizten, gegenseitig abrollenden Prägerädern hindurchgeführt wird, sodass das Streifenmaterial durch die Prägeräder erwärmt wird, dem Druck ausgesetzt wird und zugleich zu einem halbwabenförmigen Streifen geformt wird.

Die Aufgabe wird weiter gelöst mit einem Verfahren zur Herstellung einer duroplastischen Wabenstruktur aufweisend die Merkmale von Anspruch 13. Der Unteranspruch 14 betrifft einen weiteren, vorteilhaften Verfahrensschritt.

Die Aufgabe wird weiter insbesondere gelöst mit einem Verfahren zur Herstellung einer duroplastischen Wabenstruktur aus halbwabenförmigen Streifen, wobei zumindest zwei halbwabenförmige Streifen unter Ausbildung einer Wabe gegenseitig aneinander liegend angeordnet und miteinander verbunden werden, sodass eine Wabestruktur ausgebildet wird.

Die Aufgabe wird weiter gelöst mit einer duroplastischen Wabenstruktur aufweisend die Merkmale von Anspruch 15.

Die Aufgabe wird weiter gelöst mit einer duroplastischen Wabenstruktur umfassend eine Vielzahl von duroplastischen, halbwabenförmigen Streifen, wobei die Streifen im Wesentlichen aus einem Fasermaterial, insbesondere einer Papierbahn, mit duroplastischem Matrixwerkstoff bestehen, wobei jeder Streifen in dessen Verlaufsrichtung nacheinander folgend flache Kontaktabschnitte und wellenförmig verlaufende Übergangsbereiche aufweist, und wobei aneinander liegende Kontaktabschnitte zweier benachbarter halbwabenförmiger Streifen unter Ausbildung einer duroplastischen Verbindung miteinander verbunden sind, und wobei die Übergangsbereiche in Verlaufsrichtung des Streifens derart ausgestaltet sind, dass diese abgerundet verlaufen und ohne Knickstellen in die beidseitig anschliessenden Kontaktabschnitte übergehen.

Beim erfindungsgemässen Verfahren wird aus einem Streifenmaterial ein duroplastischer, halbwabenförmiger Streifens hergestellt. Unter einem halbwabenförmigen Streifen wird ein Streifen verstanden, der derart geformt ist, dass zwei nebeneinander angeordnete und miteinander verbundene halbwabenförmige Streifen einen wabenförmigen Streifen beziehungsweise das Grundelement einer Wabenstruktur ausbilden können. Das Streifenmaterial besteht im Wesentlichen aus einem Fasermaterial, insbesondere einer Papierbahn, welches mit einem zu einem Duroplast vernetzenden Bindemittel, zum Beispiel einem Phenolharz vorimprägniert ist. Unter Papierbahn wird eine Bahn aus Papier verstanden, wobei das Papier ein Material ist, bei dem Fasern (wenige mm bis einige cm lange), meist pflanzlicher Herkunft, vernetzt sind. Als Fasern wird vorzugsweise Zellulose verwendet, welche beispielsweise aus Holz oder Altpapier gewonnen wird. Eine Faser ist ein im Verhältnis zur Länge dünnes und flexibles Gebilde. Unter einem Fasermaterial wird ein grösserer Verbund von Fasern verstanden. Die Fasern können Naturfasern sein wie Pflanzenfasern, Fasern tierischen Ursprungs oder Mineralfasern geologischen Ursprungs. Die Fasern können Chemiefasern sein wie Fasern aus natürlichen Polymeren oder Fasern aus synthetischen Polymeren. Fasern können auch industriell erzeugte anorganische Fasern sein wie Glasfasern, Kohlenstofffasern, Metallfasern oder Keramikfasern. Das Fasermaterial kann auch aus einer Mischung unterschiedlicher Fasern bestehen. Das Fasermaterial kann zum Beispiel als Gewebe, Flies, Geflecht oder Gelege ausgebildet sein, beispielsweise als Baumwollgewebe, Baumwollflies, Glasgewebe oder Glasflies. In der nachfolgenden Beschreibung und insbesondere in den nachfolgenden Ausführungsbeispielen wird die Verwendung von Papier als Fasermaterial beschrieben, weil Streifenmaterial in Form von Papierbahnen für das erfindungsgemässe Verfahren besonders vorteilhaft geeignet ist. Das erfindungsgemässe Verfahren sowie die erfindungsgemässe Vorrichtung ist jedoch generell für Fasermaterial aus Materialien geeignet, die mit einem zu einem Duroplast vernetzenden Bindemittel vorimprägnierbar sind, und deren mechanischen Eigenschaften durch den einwirkenden Druck und die einwirkende Temperatur, welche erforderlich sind um das Bindemittel zu einem Duroplast zu vernetzen, erhalten oder im Wesentlichen erhalten bleiben.

Das Streifenmaterial wird kontinuierlich gefördert und dabei erwärmt und einem Druck ausgesetzt, um eine Kondensationsreaktion des Bindemittels zu bewirken, wobei über eine Abrollbewegung ein derartiger Druck auf das kontinuierlich geförderte Streifenmaterial ausgeübt wird, dass das Bindemittel in das Streifenmaterial hinein gepresst wird und dass die während der Polykondensation frei gesetzten Kondensationsprodukte wie Wasser aus dem Streifenmaterial hinaus gepresst werden, indem das Streifenmaterial zwischen zwei ineinander greifenden, beheizten, gegenseitig abrollenden Prägerädern hindurchgeführt wird, sodass das Streifenmaterial durch die Prägeräder erwärmt wird, dem Druck ausgesetzt wird und zugleich zu einem duroplastischen, halbwabenförmigen Streifen geformt wird. Die Temperatur und der Druck ist erforderlich um die Polykondensation zu bewirken, damit das Bindemittel des Streifenmaterials zum Duroplast vernetzt. Während der Polykondensation entstehen Kondensationsprodukte wie z.B. Wasser. Der Druck ist insbesondere auch erforderlich um diese Kondensationsprodukte aus dem Streifenmaterial hinauszupressen, um insbesondere eine Blasenbildung im Streifenmaterial zu vermeiden. Das erfindungsgemässe Verfahren weist den Vorteil auf, dass es insbesondere möglich ist Streifenmaterial bestehend aus einer mit einem Bindemittel vorimprägnierten Fasermaterialbahn wie eine Papierbahn in einem kontinuierlichen Verfahren zu einem duroplastischen, strukturierten Streifen zu formen, wobei während dem kontinuierlichen Verfahren sowohl die Formung des strukturierten Streifens als auch die Vernetzung des Bindemittels zum Duroplast erfolgt.

Das Streifenmaterial umfassend die Papierbahn wird vorteilhafterweise auf eine Temperatur zwischen 120°C und 280°C erwärmt, insbesondere auch auf eine Temperatur zwischen 120°C und 250 oder 260°C, und mit einem Druck zwischen 10 Bar und 300 Bar gepresst, um die Kondensationsreaktion zu bewirken.

In einem vorteilhaften Verfahren sind die beiden Prägeräder derart ausgestaltet, dass diese eine sich insbesondere kontinuierlich in Verlaufsrichtung des Streifenmaterials bewegende Druckstelle bewirken, entlang welcher der Druck auf das Streifenmaterial ausgeübt wird, wobei die Druckstelle in Verlaufsrichtung des Streifenmaterials insbesondere eine Länge zwischen 1 mm und 10 mm aufweist. Durch die sich kontinuierlich in Verlaufsrichtung bewegende Druckstelle ist gewährleistet, dass die Kondensationsreaktion entlang des Abschnittes des Streifenmaterials, welcher dieser Druckstelle ausgesetzt ist, ausgelöst wird.

In einem vorteilhaften Verfahren wird durch die Abrollbewegung ein derartiger Druck auf das Streifenmaterial erzeugt, dass der Druck in einem Mittenbereich des Streifenmaterials höher ist als am Rand des Streifenmaterials, um insbesondere Kondensationsprodukte seitlich aus dem Streifenmaterial hinauszupressen und wegzufördern.

In einem vorteilhaften Verfahren wird die Oberfläche des Streifenmaterials strukturiert, sodass der halbwabenförmige Streifen eine strukturierte Oberfläche aufweist, wobei die strukturierte Oberfläche insbesondere einer Vielzahl linienförmig verlaufender Vertiefungen umfasst. Eine derartige Oberflächenstruktur kann beispielsweise die mechanische Festigkeit des duroplastischen, halbwabenförmigen Streifens erhöhen.

In einem weiteren, vorteilhaften Verfahren wird das Streifenmaterial vor dem Zuführen in die Prägeräder vorerwärmt auf eine Temperatur zwischen 50°C und 120°C.

In einem weiteren, vorteilhaften Verfahren werden im Streifenmaterial in dessen Verlaufsrichtung gegenseitig beabstandete Kontaktabschnitte erzeugt, indem das Streifenmaterial entlang des Kontaktabschnittes einer derart tiefen Temperatur und/oder Druck ausgesetzt wird, dass die Kondensationsreaktion nicht oder nur teilweise bewirkt wird, sodass der halbwabenförmige Streifen in dessen Verlaufsrichtung gegenseitig beabstandete Kontaktabschnitte aufweist. Dies wird vorteilhafterweise dadurch bewirkt, dass die Prägeräder an deren Oberfläche Vertiefungen aufweist, sodass das abrollende Prägerad entlang dieser Vertiefung nicht am Steifenmaterial anliegt, sodass das Streifenmaterial entlang dieser Vertiefung nicht dem Druck und/oder der Temperatur ausgesetzt ist, welche die Kondensationreaktion auslöst.

In einem weiteren, vorteilhaften Verfahren wird der auf das Streifenmaterial bewirkte Druck angesteuert indem jedes Prägerades einzeln angetrieben wird und das Drehmoment jedes Prägerades einzeln angesteuert wird.

In einem weiteren, vorteilhaften Verfahren werden die beiden Prägeräder mit einer ansteuerbaren Linearkraft gegeneinander gedrückt werden, wobei auf jedes Prägerad ein ansteuerbares Drehmoment bewirkt wird, und wobei die Linearkraft und die Drehmomente derart angesteuert werden, dass zwischen den beiden Prägerädern ein vorherbestimmter Druck resultiert, der auf das Streifenmaterial wirkt.

In einem weiteren, vorteilhaften Verfahren wird durch die Abrollbewegung ein wellenförmig verlaufender, halbwabenförmiger Streifen ohne Knickstellen ausgebildet.

In einem weiteren, vorteilhaften Verfahren wird die Geschwindigkeit der Kondensationsreaktion durch eine Regelung von Druck, Temperatur und der Fördergeschwindigkeit des Streifenmaterials beeinflusst, vorzugsweise derart, dass der halbwabenförmige Streifen zwischen 0 Sekunden und 10 Sekunden nach dem Verlassen der Prägeräder in den duroplastischen Endzustand übergegangen ist.

In einem weiteren, vorteilhaftenVerfahren umfasst das Streifenmaterial zumindest zwei übereinander liegende Teilstreifen, einen ersten Teilstreifen und einen zweiten Teilstreifen, wobei der ersten Teilstreifen aus einer Papierbahn besteht, welche mit einem zu einem Duroplast vernetzenden Bindemittel vorimprägniert ist, und wobei der zweite Teilstreifen aus einem Fasermaterial, insbesondere einer Papierbahn besteht, welche mit einem zu einem Duroplast vernetzenden Bindemittel vorimprägniert ist. Der zweite Teilstreifen könnte auch ein Gewebe umfassen oder aus einem Gewebe bestehen, welches mit einem zu einem Duroplast vernetzenden Bindemittel vorimprägniert ist.

In einem nachfolgenden Verfahrensschritt zur Herstellung der duroplastischen Wabenstruktur werden zumindest zwei strukturierte Streifen, vorzugsweise halbwabenförmige Streifen, unter Ausbildung einer Wabe gegenseitig aneinander liegend angeordnet und miteinander verbunden werden, insbesondere über eine duroplastische Verbindung oder durch Kleben, sodass ein Grundelement einer Wabenstruktur ausgebildet wird. Weitere strukturierte Streifen, vorzugsweise halbwabenförmige Streifen, werden mit dieser Wabenstruktur verbunden, insbesondere über eine duroplastische Verbindung oder durch Kleben, sodass die Wabenstruktur immer grösser weiter.

In einem weiteren, besonders vorteilhaften Verfahren werden halbwabenförmige Streifen verwendet, bei denen die Kondensationsreaktion entlang deren Kontaktabschnitte vorerst nicht oder nur teilweise erfolgt ist. Dabei werden zwei halbwabenförmige Streifen derart unter Ausbildung einer Wabe zusammengeführt, dass die zwei halbwabenförmigen Streifen an deren Kontaktabschnitten gegenseitig anliegend angeordnet werden, und dass jeweils zwei gegenseitig aneinander anliegende Kontaktabschnitte gemeinsam derart erwärmt werden und einem derartigen Druck ausgesetzt werden, dass an den gegenseitig anliegende Kontaktsabschnitten eine Polykondensation bewirkt wird, um die zwei strukturierten Streifen an den gegenseitig anliegenden Kontaktabschnitten über den ausgebildeten Duroplast fest miteinander zu verbinden. Die gegenseitig anliegenden Kontaktabschnitte werden besonders vorteilhaft mit einer beheizbaren Anpressvorrichtung gegenseitig aneinander gepresst, wobei die Anpressvorrichtung besonders vorteilhaft eine Oberflächenstruktur aufweist, insbesondere eine linien- oder gitterförmige Oberflächenstruktur, welche während dem gegenseitigen Verbinden an den Kontaktabschnitten anliegt und am Kontaktabschnitt eine Prägung erzeugt. Dies bewirkt eine besonders vorteilhafte gegenseitige Verbindung und Strukturierung der Kontaktabschnitte und zudem vorteilhafterweise eine erhöhte mechanische Stabilität des Kontaktabschnittes und der erzeugten Wabe.

Die Herstellungsvorrichtung zum Erzeugen eines duroplastischen, halbwabenförmigen Streifens aus einem Streifenmaterial umfasst zwei ineinander greifenden, beheizten, gegenseitig abrollenden Prägeräder, zwischen welchen das Streifenmaterial hindurchgeführt wird, sodass das Streifenmaterial durch die Prägeräder erwärmt wird, dem Druck ausgesetzt wird und zugleich zu einem halbwabenförmigen Streifen geformt wird. Die Prägeräder drehen kontinuierlich. Das Streifenmaterial wird vorteilhafterweise zudem vor den Prägerädern vorerwärmt. In einer besonders vorteilhaften Ausgestaltung wird der Druck und die Temperatur und die Drehgeschwindigkeit der Prägeräder von Sensoren überwacht und von Aktuatoren geregelt, sodass die Vernetzung des Bindemittels zum Duroplast und die Ausbildung des duroplastischen, halbwabenförmigen Streifens präzise überwacht und beeinflusst werden kann.

Die Herstellungsvorrichtung zum Erzeugen der Wabenstruktur ist in einer bevorzugten Ausgestaltung in gewisser Weise ähnlich einer Webmaschine ausgestaltet. Ein mit einer Webmaschine hergestelltes Gewebe weist Kettfäden und Schussfäden auf, wobei die Schussfäden durch die Kettfäden zusammengehalten werden. In webmaschinentechnischer

Terminologie entspricht der einzutragende strukturierte Streifen, insbesondere der halbwabenförmig oder wabenförmig strukturierte Streifen, einem Schussfaden. Die Funktion der Kettfäden wird bei der Herstellungsvorrichtung beziehungsweise bei der hergestellten Wabenstruktur durch das feste Verbinden des jeweils eingetragenen strukturierten Streifens mit der Wabenstruktur übernommen, wobei diese Verbindung als eine duroplastische Verbindung oder eine Klebeverbindung ausgestaltet sein kann. Auf Grund der relativ grossen Ähnlichkeit zwischen der Herstellungsvorrichtung sowie einer Webmaschine, wie zum Beispiel einer Luft- oder Greiferwebmaschine, weist die erfindungsgemässe Herstellungsvorrichtung beziehungsweise das erfindungsgemässe Herstellungsverfahren eine Vielzahl von Eigenschaften auf, wie diese bisher einzig bei Webmaschinen bekannt waren. Ähnlich wie bei Webmaschinen erlaubt es das erfindungsgemässe Herstellungsverfahren eine Vielzahl möglicher, auch unterschiedlich strukturierter Streifen einzutragen, wobei sich die strukturierten Streifen zum Beispiel bezüglich Struktur, Gewicht, Breite B, Farbe oder Material unterscheiden könnten. Nebst strukturierten Streifen können auch eine Vielzahl andere Materialien oder Strukturen eingetragen werden, zum Beispiel ein Kanalelement aufweisend einen Kanal. Die Struktur der erfindungsgemässen Wabenstruktur wird vorzugsweise aus streifenförmigem Material enthaltend Zellulose beziehungsweise Papier gebildet. Falls erforderlich ist es jedoch möglich zusätzliche, andere Materialien in die Wabenstruktur aufzunehmen. In erster Näherung kann davon ausgegangen werden, dass solche Materialien mit der Anschlagkante der Wabenstruktur verbunden werden können, welche sich mit der Anschlagkante der Wabenstruktur fest verbinden lassen, z.B. auch durch Kleben.

Die Herstellungsvorrichtung umfasst zumindest eine Zuführvorrichtung, welche einen strukturierten Streifen der Anschlagvorrichtung zuführen kann. Die Anschlagvorrichtung umfasst vorzugsweise einen Eintragskanal, in welche der strukturierte Streifen eintragbar ist und danach an eine Anschlagkante einer Wabenstruktur anschlagbar ist. Mit der Herstellungsvorrichtung sind eine Vielzahl möglicher Wabenstrukturen herstellbar, da die Herstellungsvorrichtung eine ausserordentlich hohe Flexibilität aufweist.

Die Vorrichtung zur Herstellung eines duroplastischen, halbwabenförmigen Streifens aus einem Streifenmaterial, wobei das Streifenmaterial im Wesentlichen aus einem Fasermaterial besteht, welches mit einem zu einem Duroplast vernetzenden Bindemittel vorimprägniert ist, umfasst in einer vorteilhaften Ausgestaltung ein erstes und ein zweites Prägerad aufweisend je eine in Umfangsrichtung verlaufende Kontaktfläche mit in Umfangsrichtung beabstandet angeordneten

Prägezähnen und dazwischen angeordneten Vertiefungen, wobei das erste und das zweite Prägerad derart gegenseitig angepasst ausgestaltet und gegenseitig ineinander greifend angeordnet sind, dass zwischen dem ersten und dem zweiten Prägerad eine linien- oder flächenförmige Druckstelle entsteht, welche sich während dem Drehen der Prägeräder entlang der Kontaktfläche fortbewegt, um eine sich entlang des Streifenmaterials bewegende, abrollende Druckstelle zu erzeugen, sowie umfasst eine ansteuerbare Druckerzeugungsvorrichtung, welche mit dem ersten und zweiten Prägerad verbunden ist, um zwischen den Prägerädern einen ansteuerbaren Druck zu erzeugen, sowie umfasst je eine Antriebsvorrichtung zum Antrieb des ersten und des zweiten Prägerades, sowie umfasst eine Heizvorrichtung für zumindest eines der Prägeräder, sowie umfasst eine Regelungsvorrichtung, welche zumindest mit den Antriebsvorrichtungen und der Druckerzeugungsvorrichtung Signal übertragend verbunden ist, um die Prägeräder gegengleich in einer Förderrichtung zu drehen und um über die Druckerzeugungsvorrichtung und die Antriebsvorrichtungen an der Druckstelle einen ansteuerbaren Druck zu erzeugen.

Die erfindungsgemässe Wabenstruktur weist den Vorteil auf, dass diese aus einer Vielzahl von strukturierten Streifen besteht, welche über eine duroplastische Verbindung gegenseitig miteinander verbunden sind. Daher weist die Wabenstruktur eine vorteilhafte mechanische Stabilität auf, insbesondere auch bei höheren Temperaturen. Zudem weist die Wabenstruktur auch eine vorteilhafte thermische Stabilität auf, da der Duroplast, im Gegensatz zu einem Thermoplast, bei höheren Temperaturen nicht plastisch wird und nicht schmilzt. Duroplaste bestehen im ausgehärteten Endzustand vorteilhafterweise aus engmaschig chemisch vernetzten Makromolekülen. Sie sind unlöslich, nicht mehr schmelzbar und bis zur Zersetzung fest. Die erfindungsgemässe Wabenstruktur weist den Vorteil auf, dass diese vorzugsweise wasserunlöslich ist. Die erfindungsgemässe Wabenstruktur ist deshalb feuchtigkeitsunempfindlich und kann daher in einer Vielzahl von Anwendungsgebieten eingesetzt werden.

Das erfindungsgemässe Verfahren weist den Vorteil auf, dass die Wabenstruktur kostengünstig herstellbar ist. Zudem ist die Wabenstruktur in einer Vielzahl möglicher Formen und Breiten herstellbar. Die Waben können in einer Vielzahl möglicher geometrischen Formen hergestellt werden. In einem weiteren vorteilhaften Verfahren werden in einem ersten Teilverfahrensschritt linear beziehungsweise geradlinig verlaufende Wabenstreifen hergestellt, und in einem zweiten Teilverfahrensschritt die linear verlaufenden Wabenstreifen zum Beispiel durch Kleben derart miteinander verbunden, dass eine flächenförmige Wabenstruktur ausgebildet wird. Dieses Verfahren erlaubt es die einzelnen Wabenstreifen in einer Vielzahl möglicher geometrischer Formen herzustellen, weshalb auch die Wabenstrukturen in einer Vielzahl möglicher Strukturen herstellbar sind. Die Wabenstreifen beziehungsweise die strukturierten Streifen sind in unterschiedlichster Breite herstellbar, wobei diese Breite die Höhe der Wabenstruktur bestimmt, weshalb auf sehr einfache Weise Wabenstrukturen unterschiedlicher, konstanter Höhe herstellbar sind. Zudem ist es möglich Wabenstreifen oder strukturierte Streifen mit veränderlicher Breite herzustellen, was es ermöglicht eine Wabenstruktur mit veränderlicher Höhe herzustellen.

Das erfindungsgemässe Verfahren ermöglicht es ausgehend von einem Streifenmaterial beziehungsweise ausgehend von einem streifenförmigen Material Wabenstrukturen oder Wabenstreifen herzustellen. Vorteilhafterweise wird als Streifenmaterial Zellulose verwendet, wobei das Streifenmaterial mit einem zu einem Duroplast vernetzenden Bindemittel versehen, vorimprägniert oder beschichtet ist, oder wobei das Streifenmaterial vorgängig mit einem zu einem Duropalst vernetzenden Bindemittel getränkt wird, bevor aus dem Streifenmaterial strukturierte Streifen gefertigt werden. Das Streifenmaterial kann auch aus einem anderen Material bestehen, beispielsweise einem Kunststoff.

Es kann sich als vorteilhaft erweisen das Streifenmaterial und/oder der strukturierte Streifen und/oder die Wabenstruktur mit einem Silikat zu versehen, indem diese z.B. in ein Silikat getaucht oder mit Silikat besprüht werden, was die Herstellung von feuerfesten beziehungsweise flammhemmenden Wabenstreifen oder Streifenmaterial und daher auch die Herstellung von Wabenstrukturen mit derartigen Eigenschaften ermöglicht.

In einer weiteren vorteilhaften Ausgestaltung können die Wabenstreifen oder die strukturierten Streifen auch dreidimensional verlaufend hergestellt werden, wobei eine Wabenstrukturen, umfassend eine Vielzahl derartiger Wabenstreifen oder strukturierter Streifen, ebenfalls einen dreidimensionalen Verlauf aufweist. Das erfindungsgemässe Verfahren erlaube es somit Wabenstrukturen je nach Erfordernis in einer Vielzahl möglicher dreidimensional verlaufender Struktur herzustellen.

Das Verfahren beziehungsweise die Vorrichtung zur Herstellung von duroplastischen, halbwabenförmigen Streifen oder duroplastischen Wabenstrukturen ermöglich es die Wabenstrukturen sehr kostengünstig herzustellen, und ermöglicht es zudem die Wabenstrukturen in einer Vielzahl von Formen, Breiten und Dicken, sowie mit einer Vielzahl möglicher Wabengeometrien herzustellen. Die erfindungsgemässen Wabenstrukturen können als Kernmaterial dienen. Die erfindungsgemässen Wabenstrukturen können auch beidseitig mit einer Deckplatte versehen werden, um insbesondere Leichtbauwände mit einem Sandwichaufbau herzustellen, wobei die Leichtbauwände aus einem Kern mit Wabenstruktur sowie ein- oder beidseitig der Wabenstruktur angeordneten Deckplatten bestehen.

Duroplaste bestehen im ausgehärteten Endzustand aus engmaschig chemisch vernetzten Makromolekülen. Sie sind unlöslich, nicht mehr schmelzbar und bis zur Zersetzung fest. Aus niedermolekularen Ausgangsstoffen, Monomere genannt, werden zunächst unvernetzte bzw. nur wenig vernetzte, noch plastisch formbare und ebenfalls noch relativ niedermolekulare Zwischenstufen/Vorprodukte hergestellt, die - als Harze oder hierin als Bindemittel bezeichnet - für die eigentliche Vernetzung zum Duroplast dienen. Sie enthalten zu diesem Zweck zwei oder mehr zur Vernetzung fähige funktionelle Gruppen. Die räumliche Vernetzung erfolgt im vorliegenden Verfahren in Anwesenheit von Wärme oder Strahlung (UV-, IR-Strahlung). Tritt bei der Vernetzung eine Abspaltung flüchtiger Stoffe auf, so spricht man von Kondensationsharzen, wie z. B. bei den Phenolharzen. Harzmassen, bei denen durch Kondensationsreaktionen Wasser bzw. Wasserdampf bei den üblichen Verarbeitungstemperaturen frei gesetzt wird, werden auch als Hochdruckharze bezeichnet. Falls das Streifenmaterial mit einem derartigen Hochdruckharz vorimprägniert ist, so ist der von den Prägerädern auf das Streifenmaterial ausgeübte Druck besonders wichtig, um während dem Ablauf der Kondensationsreaktion eine Blasenbildung oder gar ein Aufreissen des Streifenmaterials auf Grund des in Streifenmaterial entstehenden Wasserdampfs bzw. des entstehenden Wasserdampfdrucks zu vermeiden. Beim vorliegenden Verfahren wird in einer möglichen Ausführungsform ein Phenolharz als Bindemittel verwendet, wobei generell Bindemittel geeignet sind, welche zu einem Duroplast vernetzen.

Die Erfindung wird nachfolgend an Hand von Ausführungsbeispielen im Detail erläutert.

### Kurze Beschreibung der Zeichnungen

Die zur Erläuterung der Ausführungsbeispiele verwendeten Zeichnungen zeigen:
Fig. 1 eine schematische, perspektivische Darstellung einer Herstellungsvorrichtung;
Fig. 1a eine schematische, perspektivische Darstellung einer weiteren Herstellungsvorrichtung;
Fig. 2 eine perspektivische Darstellung einer Erwärmungsvorrichtung;
Fig. 3 eine perspektivische Darstellung einer Umformvorrichtung;
Fig. 4 eine perspektivische Darstellung einer Verbindungsvorrichtung;
Fig. 5 ein Ausführungsbeispiel einer Verbindungsvorrichtung;
Fig. 5a, 5b mehrere Ausführungsbeispiele eines ersten Prägerades;
Fig. 6a, 6c Ausführungsbeispiele eines strukturierten Streifens;
Fig. 6b ein Beispiel eines strukturierten Streifens;
Fig. 7, 7a zwei Ausführungsbeispiele eines Wabenstreifens;
Fig. 8a,8b,8c,8d,8f unterschiedlich ausgestaltete strukturierte Streifen;
Fig. 9a,9b,9c,9d, unterschiedlich ausgestaltete Wabenstreifen;
Fig. 10 schematisch eine Seitenansicht einer Herstellungsvorrichtung;
Fig. 10a schematisch eine Seitenansicht einer weiteren Herstellungsvorrichtung;
Fig. 10b eine Detailansicht der in Figur 10a dargestellten Anpressvorrichtung;
Fig. 10c ein weiteres Ausführungsbeispiel einer Umform- und Zuführvorrichtung;
Fig. 10d ein Ausführungsbeispiel einer Leitvorrichtung mit Anschlag;
Fig. 10e eine Detailansicht der in Figur 10d dargestellten Anpressvorrichtung;
Fig. 10f, 10g, 10h, 10i verschiedene Verfahrenszustände während dem Verbinden eines
   strukturierten Streifens mit einer Wabenstruktur;
Fig. 10k schematisch eine Draufsicht auf ein weiteres Ausführungsbeispiel einer
   Anschlagvorrichtung;
Fig. 10l, 10m, 10n, 10o verschiedene Verfahrenszustände während dem Verbinden eines strukturierten Streifens mit einer Wabenstruktur in einer Draufsicht auf die Anschlagvorrichtung gemäss Fig. 10k;
Fig. 10p schematisch eine Draufsicht auf eine Anschlagvorrichtung aufweisend eine
   Vorrichtung zum Unterstützen des Eintrages mit Hilfe eines gasförmigen Fluides;
Fig. 11 schematisch eine Vorrichtung zum Zusammenführen von Teilstreifen;
Fig. 12 schematisch eine Führungsvorrichtung zum Formen eines Wabenstreifens;
Fig. 13 eine Seitenansicht einer dreidimensional geformten Wabenstruktur;
Fig. 14 ein weiteres Ausführungsbeispiel einer zweidimensional geformten Wabenstruktur;
Fig. 15 eine Detailansicht der Verbindung einer Wabenstruktur mit einer Deckplatte;
Fig. 16 eine Seitenansicht durch eine mit Deckschichten versehene Wabenstruktur;
Fig. 17 schematisch eine Seitenansicht einer weiteren Herstellungsvorrichtung;
Fig. 18 eine Draufsicht auf eine Schneid- und Haltevorrichtung, insbesondere zur Herstellung
   schmalerer Streifen;
Fig. 19 ein weiteres Ausführungsbeispiel einer Herstellungsvorrichtung;
Fig. 21 ein weiteres Ausführungsbeispiel einer Herstellungsvorrichtung;
Fig. 22 ein weiteres Ausführungsbeispiel einer Herstellungsvorrichtung;
Fig. 23 schematisch eine Draufsicht auf ein weiteres Ausführungsbeispiel einer
   Herstellvorrichtung;
Fig. 24 eine Seitenansicht einer hergestellten Wabenstruktur;
Fig. 24a eine Draufsicht einer hergestellten Wabenstruktur;
Fig. 25 eine Seitenansicht einer Streifens;
Fig. 25a eine Draufsicht einer weiteren hergestellten Wabenstruktur;
Fig. 25b eine Ansicht der Stirnseite der in Figur 25a dargestellten Wabenstruktur;
Fig. 26 eine Seitenansicht eines ersten Prägerades mit einem ferromagnetischen Zahnkranz;
Fig. 26a eine perspektivische Ansicht des in Figur 26 dargestellten Prägerades;
Fig. 26b eine Detailansicht des Ineinandergreifens der Prägezähne des ersten und zweiten
   Prägerades;
Fig. 26c einen Schnitt entlang der Linie C-C des in Figur 26 dargestellten Prägerades;
Fig. 26d eine Seitenansicht eines weiteres Ausführungsbeispiels eines Prägezahns;
Fig. 26e eine Teilansicht eines Schnitts durch die beiden Prägeräder mit dazwischen
   angeordnetem Streifen;
Fig. 26f eine Draufsicht auf den halbwabenförmigen Streifen mit Druckstelle;
Fig. 26g eine Teilansicht eines Schnitts durch ein Prägerad;
Fig. 26h eine Teilansicht einer Draufsicht auf die Oberfläche eines Prägerades;
Fig. 26i eine Teilansicht eines Schnitts durch ein Prägerad;
Fig. 26k ein halbwabenförmiger Streifen mit teilweise strukturierter Oberfläche;
Fig. 26l ein Schnitt durch einen halbwabenförmigen Streifen mit strukturierter
   Oberfläche;
Fig. 26m schematisch die an den Prägerädern auftretenden Kräfte und Momente;
Fig. 26n eine Seitenansicht eines weiteres Ausführungsbeispiels eines Prägezahns;
Fig. 27 eine schematische Seitenansicht von zwei ineinander greifenden Prägerädern;
Fig. 28 ein Streifen mit vorgegebener Form mit vorstehenden Laschen;
Fig. 28a eine Draufsicht auf den in einer Wabenstruktur angeordneten Streifen gemäss
   Figur 28;

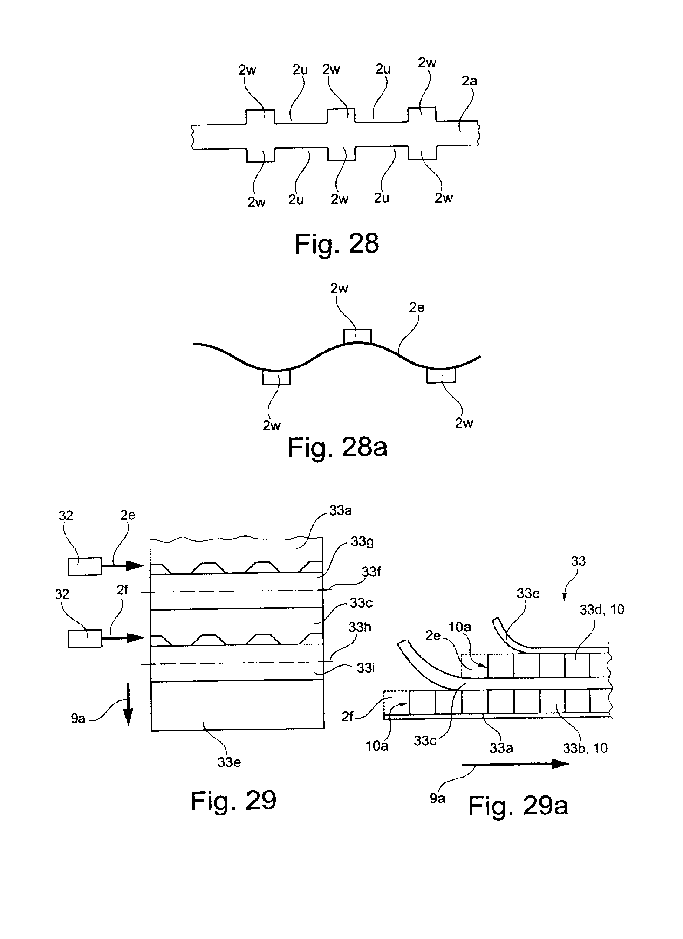

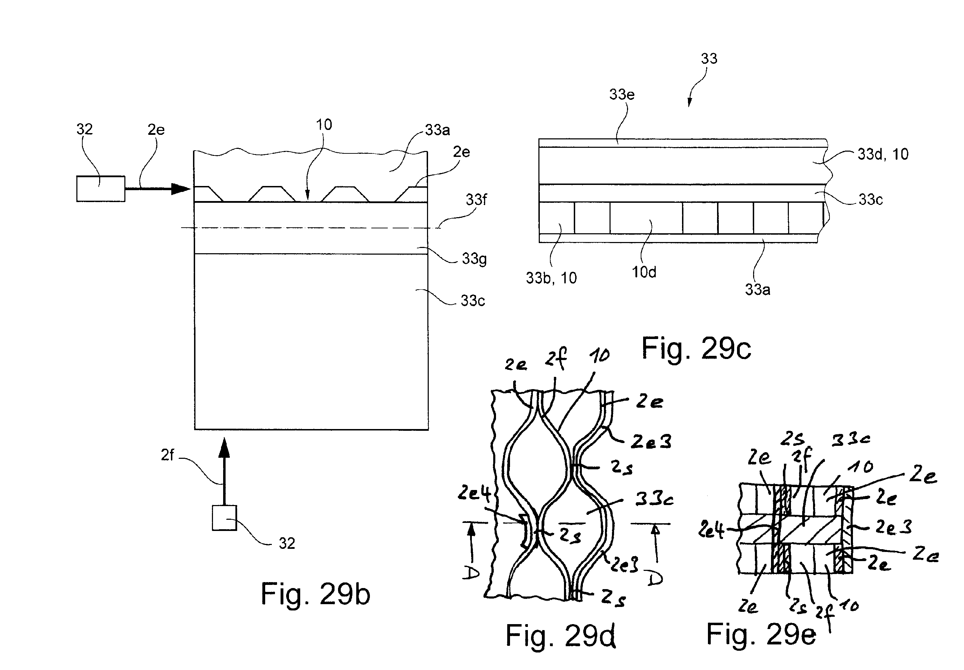

Fig. 29 eine schematische Draufsicht einer weiteren Herstellungsvorrichtung;
Fig. 29a eine Seitenansicht einer Sandwichplatte während derer Herstellung;
Fig. 29b eine schematische Draufsicht einer weiteren Herstellvorrichtung;
Fig. 29c eine Seitenansicht einer weiteren Sandwichplatte während derer Herstellung;
Fig. 29d eine Draufsicht einer weiteren Sandwichplatte;
Fig. 29e einen Schnitt entlang der Linie D-D der Sandwichplatte gemäss Figur 29d;

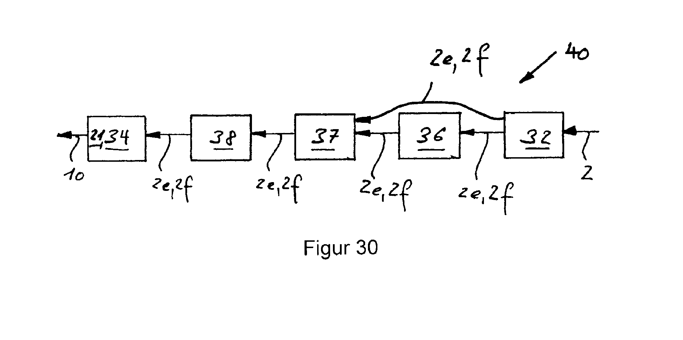

Fig. 30 schematisch eine Maschine zur Herstellung einer duroplastischen Wabenstruktur.

Grundsätzlich sind in den Zeichnungen gleiche Teile mit gleichen Bezugszeichen versehen.

### Wege zur Ausführung der Erfindung

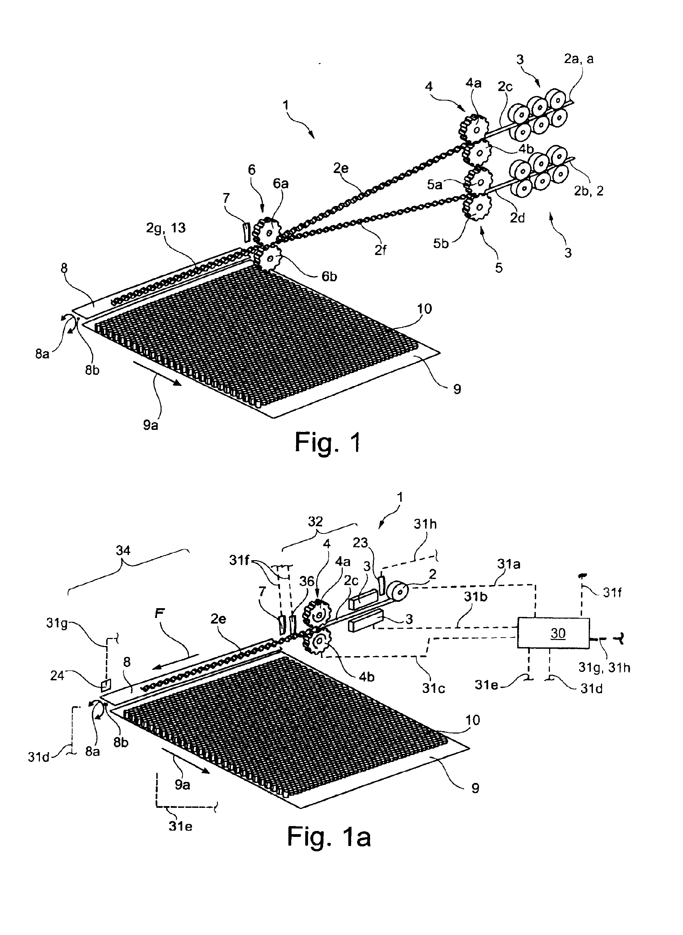

Fig. 1 zeigt schematisch und dreidimensional eine Vorrichtung 1 zur kontinuierlichen Herstellung einer Wabenstruktur 10. Die Wabenstruktur 10 liegt auf einem sich in Förderrichtung 9a bewegenden Förderband 9 auf, wobei dem in Förderrichtung 9a hinteren Ende der Wabenstruktur 10 fortlaufend Wabenstreifen 13 zugeführt werden und am Ende beziehungsweise an der Anschlagkante mit der Wabenstruktur 10 befestigt werden, z.B. angeklebt werden, sodass der befestigte Wabenstreifen 13 zu einem Teil der Wabenstruktur 10 wird, und daraufhin ein weiterer Wabenstreifen 13 an die Wabenstruktur 10 befestigt, z.B. angeklebt werden kann. Die dargestellte Herstellvorrichtung 1 umfasst zwei nicht sichtbare Haltevorrichtungen 20 mit Vorratsrollen, auf denen ein Streifenmaterial 2, insbesondere mit einem zu einem Duropalst vernetzenden Bindemittel vorimprägnierte Papierstreifen beziehungsweise Zellulosestreifen, gespeichert sind. Das Streifenmaterial 2 weist vorzugsweise eine konstante Breite B auf, wobei die Breite B vorzugsweise im Bereich zwischen 2 cm und 25 cm liegt. Die Breite B bestimmt die Bauhöhe der Wabenstruktur 10, sodass je nach gewünschter Höhe der Wabenstruktur 10 ein entsprechend breites Streifenmaterial 2 zur Herstellung der Wabenstreifen 13 verwendet wird.

Das Streifenmaterial 2 ist mit einem zu einem Duropalst vernetzenden Bindemittel vorimprägniert, z.B. durch Tränken oder Beschichten. Das Streifenmaterial 2 besteht im Wesentlichen vorzugsweise aus Zellulose, insbesondere Papier oder Altpapier.

Als Polymerwerkstoff wird ein Duroplast verwendet. Zu den Duroplasten zählen insbesondere die Aminoplaste und die Phenoplaste, die beide über Methylenbrücken (-CH₂-) oder Methylenetherbrücken miteinander verbunden sind, aber auch Kunstharze wie Melaminharz, Phenolharz oder einem Melaminharz-Phenolharz-Derivat, Epoxidharze, vernetzte Polyacrylate und weitere vernetzte Polymere.

Das in Figur 1 dargestellte Ausführungsbeispiel einer Vorrichtung 1 verwendet zur Herstellung der Wabenstruktur 10 Streifenmaterial 2,2a,2b bestehend aus einem kunstharzbeschichteten beziehungsweise einem Duroplast beschichteten Papierstreifen bzw. Zellulosestreifen. Das Streifenmaterial 2 ist auf nicht dargestellten Vorratsrollen gespeichert. Den Vorratsrollen nachfolgend ist eine Erwärmungsvorrichtung 3 angeordnet, welche das von den Vorratsrollen abgezogene Streifenmaterial 2, 2a, 2b erwärmt, bevor das derart erwärmte Streifenmaterial 2c, 2d in die Umformvorrichtung 4, 5 gelangt, welche aus den vormals unstrukturierten Streifen 2c,2d durch Umformung strukturierte Streifen 2e,2f erzeugt. Die sich nach diesem Verarbeitungsschritt ergebenden strukturierten Streifen 2e, 2f werden einer Verbindungsvorrichtung 6 zugeführt, in welcher die beiden Streifen 2e,2f bezüglich deren Verlaufsrichtung derart gegenseitig positioniert zusammengeführt und aneinandergepresst werden, dass sich gegenüberliegende Flächen 2h, 2i, auch als Kontaktabschnitte bezeichnet, gegenseitig berühren. Eine chemische Reaktion des Bindemittels hat zur Folge, dass die beiden Kontaktabschnitte 2h, 2i der beiden Streifen 2e,2f eine duroplastische Verbindung ausbilden, welche nach dem Abkühlen eine durch thermische Einflüsse nicht mehr plastifizierbare Verbindung ausbildet. Die beiden derart miteinander verbunden Streifen 2e,2f bilden eine Wabenstruktur 2g aus, welche mit Hilfe einer Schneidvorrichtung 7 geschnitten wird, sodass die Wabenstruktur 2g nach dem Schneiden zu einem Wabenstreifen 13 wird. Im dargestellten Ausführungsbeispiel liegt der Wabenstreifen 13 auf einer Auflage 8 auf, welche um ein Drehzentrum 8b in Drehrichtung 8a schwenkbar gelagert ist. Es kann sich als vorteilhaft erweisen, die sich auf der Auflage 8 befindliche Wabenstruktur 2g bzw. den Wabenstreifen 13 mit Hilfe einer Kühlvorrichtung 11 zu kühlen, beispielsweise mit zugeführter Luft 11a, um dadurch den erwärmten Wabenstreifen 13 abzukühlen.

Das Verfahren zum kontinuierlichen Herstellen einer Wabenstruktur 10 kann somit dadurch erfolgen, dass zwei mit einem zu einem Duroplast vernetzenden Bindemittel bzw. einem Polymerwerkstoff versehene Streifenmaterialien 2a,2b zu strukturierten halbwabenförmigen Streifen 2e,2f geformt werden, dass die beiden strukturierten halbwabenförmigen Streifen 2e,2f zusammengeführt und miteinander zu einer Wabenstruktur 2g verbunden werden, wobei zwischen den beiden strukturierten halbwabenförmigen Streifen 2e,2f eine duroplastische Verbindung ausgebildet wird, dass die Wabenstruktur 2g in einer vorbestimmten Länge zu einem Wabenstreifen 13 geschnitten wird, dass der Wabenstreifen 13 eine zum Anschlag an eine Anschlagkante 10a der Wabenstruktur 10 bestimmte Anschlagseite 13b aufweist, dass die Anschlagseite des Wabenstreifens 13 und/oder die Anschlagkante 10a der Wabenstruktur 10 mit einem Klebstoff versehen wird, und dass die Anschlagseite 13b des Wabenstreifens 13 der Anschlagkante 10a der Wabenstruktur 10 zugeführt und mit dieser verklebt wird, sodass der Wabenstreifen 13 Teil der Wabenstruktur 10 bildet, wobei der zuletzt zugeführte und angeklebte Wabenstreifen 13 eine Anschlagkante 10a ausbildet, an welcher der nächst folgende Wabenstreifen 13 angeklebt wird.

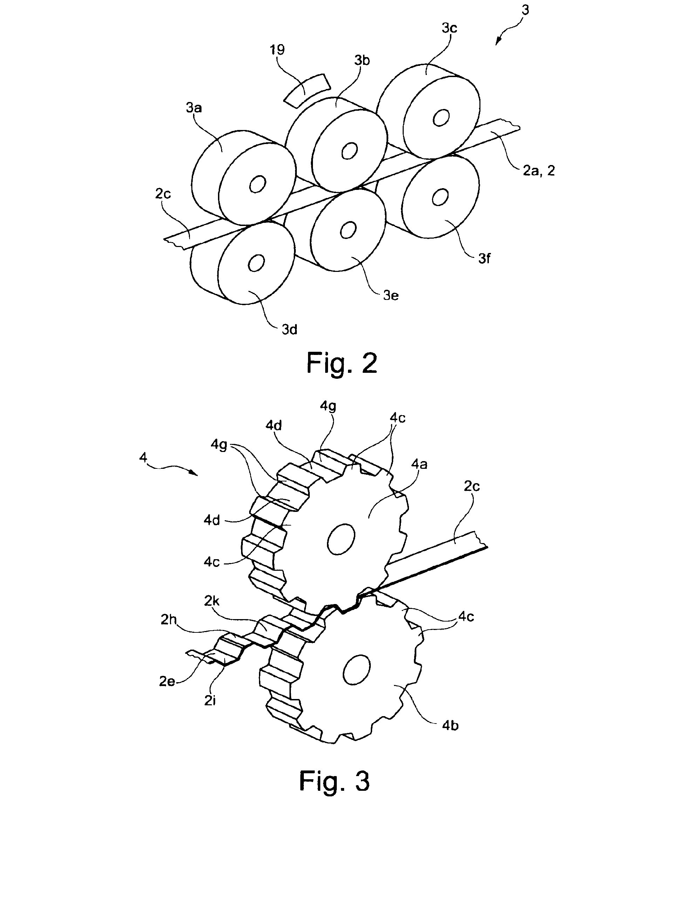

Figur 2 zeigt die in Figur 1 dargestellte Erwärmungsvorrichtung 3 im Detail. Diese umfasst sechs beheizbare, drehbare Rollen 3a, 3b, 3c, 3d, 3e, 3f, wobei jeweils zwei gegenüberliegend angeordnete Rollen jeweils einen gegenseitigen Anpressdruck erzeugen, um eine Anpresskraft auf das Streifenmaterial 2 auszuüben. Das zugeführte Streifenmaterial 2 wird in der Erwärmungsvorrichtung 3 einerseits erwärmt und andererseits unter Druck gepresst, so dass der Kunstharz bzw. das Bindemittel erwärmt wird und das Streifenmaterial 2 vorzugsweise vollständig vom Kunstharz bzw. vom Bindemittel durchtränkt wird. In einer vorteilhaften Ausgestaltung sind die Oberflächen der Rollen 3a bis 3f mit einer Schmutz abweisenden Schicht beschichtet bzw. mit einer antiadhäsiven Oberfläche versehen. Die Rolle 3a bis 3f könnte beispielsweise aus Chromstahl gefertigt sein und eine Oberflächenbeschichtung aus Nanopartikeln aufweise, welche ein Anhaften von Verunreinigungen wie das Kunstharz verhindern. Vorteilhafterweise ist zudem eine Reinigungsvorrichtung 19 vorgesehen, welche in Figur 2 nur schematisch dargestellt ist, und welche dazu dient insbesondere die Oberflächen der Rollen 3a bis 3f, welche mit dem Streifenmaterial 2, 2a, 2b in Kontakt gelangen, von Verunreinigungen zu reinigen.

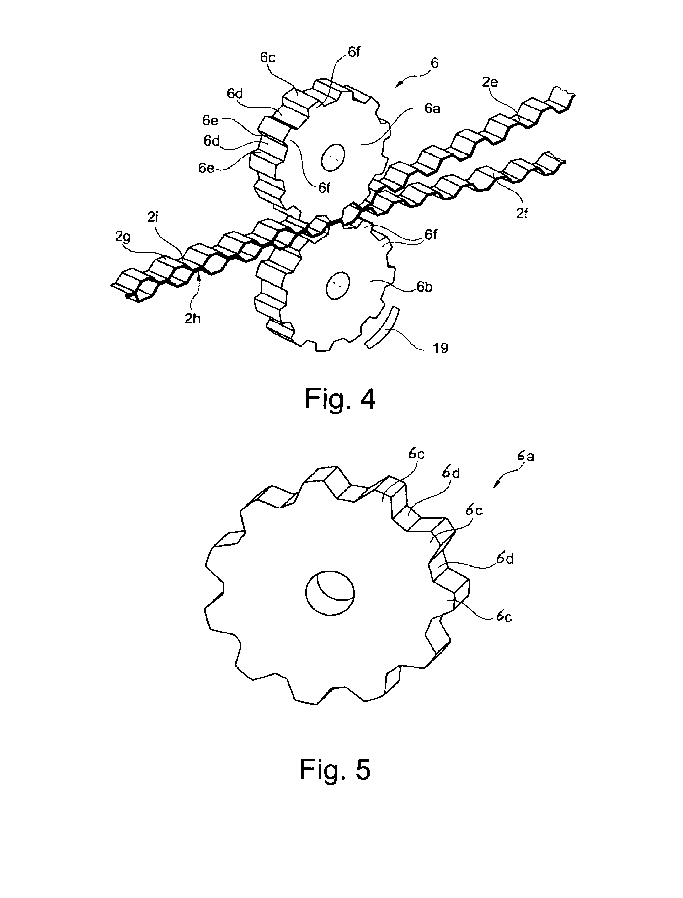

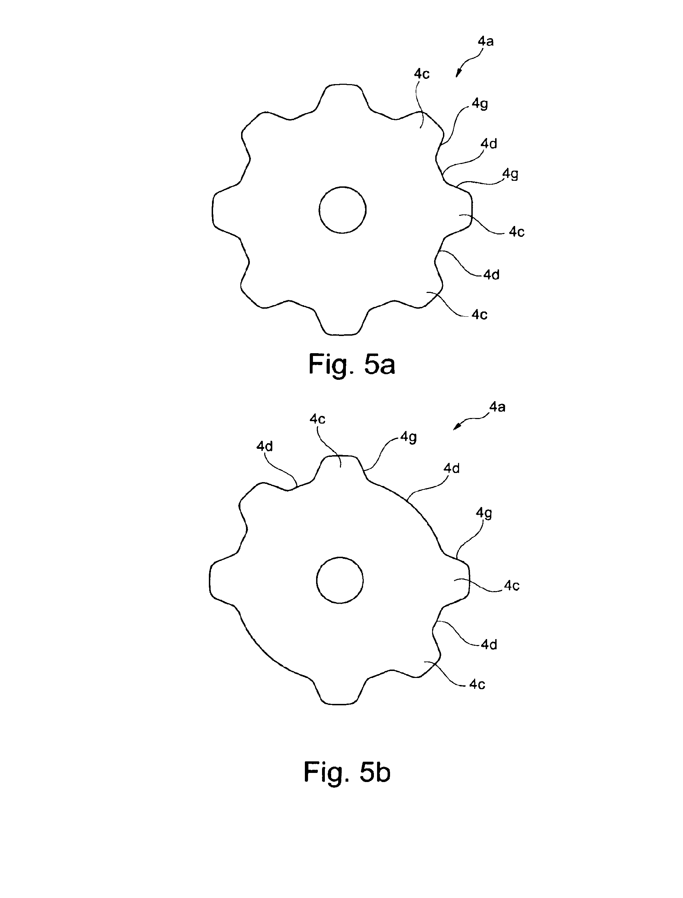

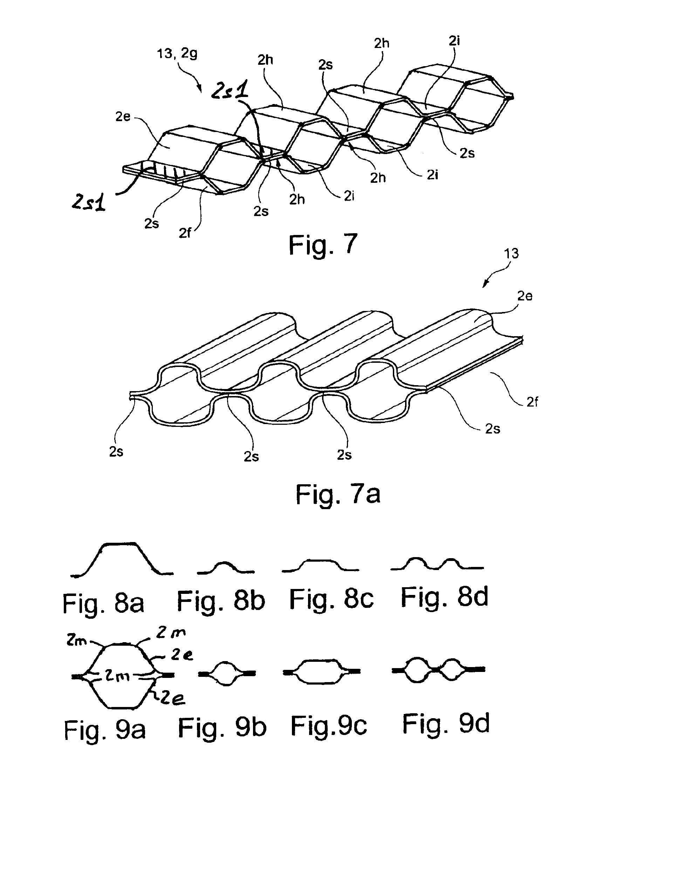

Figur 3 zeigt sehr schematisch ein Ausführungsbeispiel einer Umformvorrichtung 4. Das vorerwärmte und dadurch besonders flexible und einfach verformbare Streifenmaterial 2c wird der Umformvorrichtung 4 zugeführt und weist danach die durch die Form der Umformvorrichtung 4 vorbestimmte Struktur auf. Im dargestellten Ausführungsbeispiel werden dazu jeweils zwei gegenüber liegende Prägeräder 4a, 4b verwendet, ein erstes Prägerad 4a, das in ein zweite Prägerad 4b eingreift. Die Prägeräder 4a, 4b sind auf den ersten Blick ähnlich wie Zahnräder ausgestaltet mit in Umfangsrichtung beabstandet angeordneten Prägezähnen 4c, wobei in Umfangsrichtung zwischen den Prägezähnen 4c Vertiefungen 4d beziehungsweise Grundflächen 4d mit anschliessenden Seitenflächen 4g angeordnet sind. Im dargestellten Ausführungsbeispiel ist das zweite Prägerad 4b gegengleich zum ersten Prägerad 4a ausgestaltet, so dass jeweils ein Prägezahn 4c des ersten Prägerades 4a in eine Vertiefung 4d des zweiten Prägerades 4b eingreift und umgekehrt, so dass, wie in Figur 3 dargestellt, das Streifenmaterial 2c in die durch die Geometrie der Prägezähne 4c bestimmte Form umgeformt wird, so dass ein strukturierter Steifen 2e entsteht, mit einer unteren Fläche 2i, einer oberen Fläche 2h und Seitenflächen 2k. Da die Struktur des strukturierten Streifens 2e durch die Geometrie der Prägeräder 4a, 4b bestimmt wird, ist es auf sehr einfache Weise möglich strukturierte Streifen 2e mit unterschiedlichster Struktur dadurch zu erzeugen, dass Prägeräder 4a, 4b mit einer unterschiedlich gestalteten Umfangsfläche verwendet werden. Beispielsweise kann die in Umfangsrichtung verlaufende Oberfläche des ersten Prägerades 4a dadurch verändert werden, dass der Prägezahn 4c in Umfangsrichtung eine breitere oder schmälere Oberfläche aufweist, oder dass die Grundfläche 4d eine in Umfangsrichtung breitere oder schmälere Oberfläche aufweist, oder dass der Prägezahn 4c eine andere Form aufweist und zum Beispiel rund ausgestaltet ist, oder dass die Seitenfläche 4g bezüglich Form oder auch bezüglich Tiefe unterschiedlich ausgestaltet sind. Zudem kann der Gesamtdurchmesser des Prägerades 4a je nach Erfordernis gewählt werden, was zur Folge hat, dass durch die unterschiedlichsten Anordnungsmöglichkeiten und Ausgestaltungsmöglichkeiten der Prägezähne 4c strukturierte Streifen 2e in einer grossen Vielfalt von Formen herstellbar sind, wie dies beispielhaft in den Figuren 8a bis 8f dargestellt ist. Die detaillierte Ausgestaltung der Prägezähne 4c ist in Figur 3 nur schematisch dargestellt. Die Prägezähne 4c weisen abgerundete Zähne auf, wie dies z.B. in der Figur 5a im Detail dargestellt ist.

Die in Figur 1 dargestellte Umformvorrichtung 5 ist vorzugsweise identisch ausgestaltet wie die in Figur 1 und 3 dargestellte Umformvorrichtung 4.

Die Figuren 9a bis 9d zeigen Ausführungsbeispiele von unterschiedlich ausgestalteten Wabenstreifen 13, welche aus je zwei zusammengeführten und miteinander verbundenen strukturierten halbwabenförmigen Streifen 2e bestehen, wobei alle halbwabenförmigen Streifen 2e rundliche Übergangsbereiche 2m aufweisen. Figur 9a zeigt eine grosse Wabenstruktur. Figur 9b zeigt eine Wabenstruktur, welche dieselbe Form aufweist wie die in Figur 9a dargestellte Wabenstruktur, wobei die Wabenstruktur gemäss Figur 9b bezüglich Dimension wesentlich kleiner ausgestaltet ist. Figur 9c zeigt eine weitere Wabenstruktur 13, die jedoch im Vergleich zur Ausführung gemäss 9b in Verlaufsrichtung eine wesentlich grössere Länge aufweist, was dadurch erzielbar ist, dass der Prägezahn 4c in Umfangsrichtung wesentlich länger ausgestaltet ist als der zur Herstellung der Struktur gemäss Figur 9b verwendete Prägezahn 4c. Figur 9d zeigt ein weiteres Ausführungsbeispiel eines strukturierten Streifens 2e, welcher einen halbrunden Verlauf aufweist. Auch diese Struktur kann durch einen entsprechend gestalteten Oberflächenverlauf des ersten und zweiten Prägerades 4a, 4b erzeugt werden. Durch eine entsprechende Ausgestaltung der in Umfangsrichtung verlaufenden Oberfläche des ersten und zweiten Prägerades 4a, 4b können somit strukturierte Streifen 2e in einer Vielzahl möglichen Strukturen und geometrischer Dimensionen hergestellt werden.

Figur 4 zeigt eine Verbindungsvorrichtung 6 im Detail. Die beiden strukturierten halbwabenförmigen Streifen 2e, 2f werden der Verbindungsvorrichtung 6 zugeführt. Die Aufgabe der Verbindungsvorrichtung 6 ist es die beiden strukturierten Streifen 2e, 2f gegenseitig in deren Verlaufsrichtung zu Positionieren und gegenseitig miteinander zu verbinden bzw. zu verschweissen. Die gegenseitige Positionierung in Verlaufsrichtung erfolgt vorzugsweise wie dargestellt derart, dass ein unterer Abschnitt 2i des ersten strukturierten Streifens 2e mit einem oberen Abschnitt 2h des zweiten strukturierten Streifens 2f in gegenseitigen Kontakt gebracht wird, um dadurch eine gegenseitige Verbindung der beiden Streifen 2e,2f zu bewirken, und derart eine Wabenstruktur 2g bzw. einen Wabenstreifen 13 zu erzeugen. Die Verbindungsvorrichtung 6 weist ein erstes und ein zweites Führungsrad 6a, 6b auf. Die Führungsräder 6a, 6b sind als Zahnräder mit Zähnen 6f ausgestaltet, wobei diese Zähne 6f an deren Stirnseite eine beheizbare Pressfläche 6c ausbilden, wobei zwischen in Umfangsrichtung benachbarten Zähen 6f eine Vertiefung 6d mit Seitenwänden 6e angeordnet ist. Die Geometrie der Pressflächen 6c, der Vertiefungen 6d sowie der Seitenwände 6e ist entsprechend der Geometrie der strukturierten Streifen 2e, 2f angepasst ausgestaltet, so dass der Abschnitt 2i des ersten strukturierten Streifens 2e sowie der Abschnitt 2h des zweiten strukturierten Streifens 2f vorzugsweise einander gegenüberliegend angeordnet und dabei gegeneinander verpresst und dadurch verbunden werden, sodass die Wabenstruktur 2g ausgebildet wird. Die in Figur 4 dargestellte Verbindungsvorrichtung 6 weist einerseits den Vorteil auf, dass die strukturierten halbwabenförmigen Streifen 2e, 2f mit Hilfe der in die Streifen 2e,2f eingreifenden Zähne 6f in Verlaufsrichtung der Streifen 2e, 2f gegenseitig sehr genau positioniert werden können, und weist andererseits den Vorteil auf, dass die sich gegenseitig berührenden Abschnitte 2i,2h der beiden Streifen 2e,2f durch die von den Zähnen 6f bewirkte Heizung erwärmt werden und durch die von den Zähnen 6f bewirkte Presskraft gegeneinander gepresst werden, sodass sich eine besonders vorteilhafte Verbindung ausbildet, indem die beiden Streifen 2e,2f an den gemeinsamen Berührungsstellen nach der erfolgten Polykondensation gegenseitig fest duroplastisch verbunden sind. Nachfolgend wird diese Verbindung auch als ein gegenseitiges "verschweissen" bezeichnet. In einer vorteilhaften Ausführungsform ist wiederum eine nur schematisch dargestellte Reinigungsvorrichtung 19 vorgesehen um die Oberflächen des ersten und zweiten Führungsrades 6a, 6b vor Verschmutzungen zu reinigen.

Figur 5 zeigt das erste Führungsrad 6a mit einer Mehrzahl in Umfangsrichtung beabstandet angeordneter Zähne 6c, wobei die Zähne 6c vorzugsweise abgerundet verlaufen, was nicht im Detail dargestellt ist.

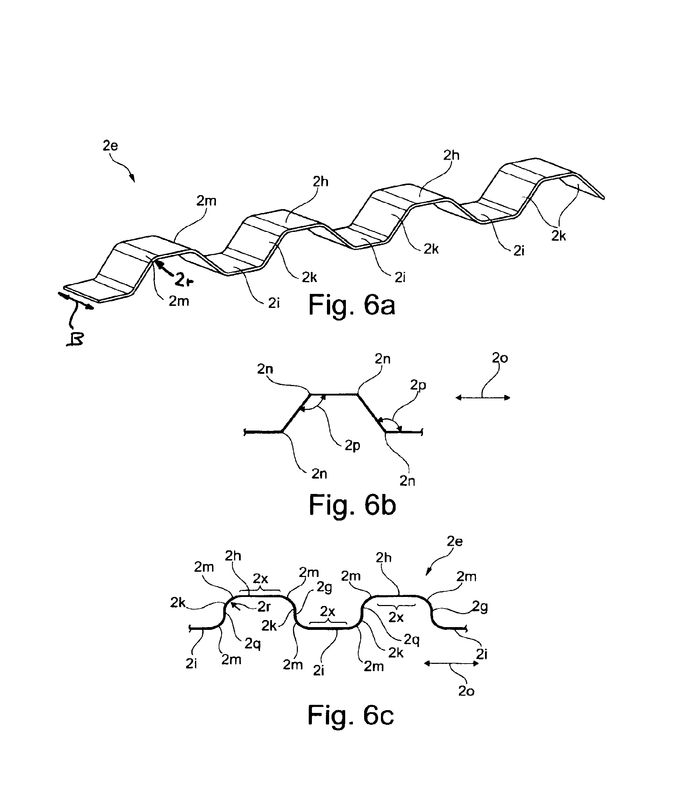

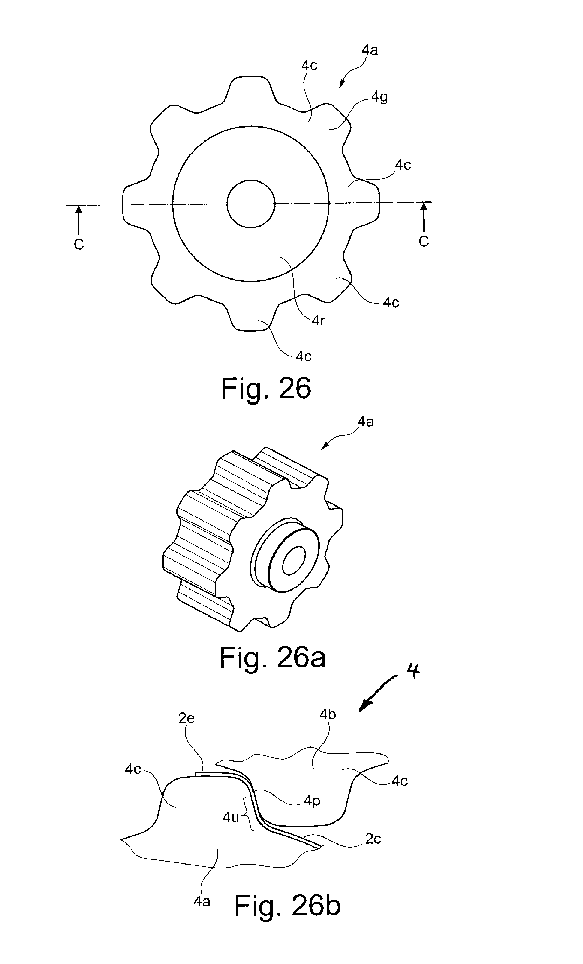

Figur 6a zeigt beispielhaft einen Abschnitt des ersten strukturierten halbwabenförmigen Streifes 2e, der mit der in Figur 26b dargestellten Umformvorrichtung 4 hergestellt wurde, im Detail. Der erste Strukturierte Streifen 2e weist obere Abschnitte 2h, untere Abschnitte 2i und Seitenabschnitte 2k auf. Zudem weist der Streifen 2e abgerundete Übergangsbereiche 2m auf. Figur 7 zeigt einen Abschnitt einer Wabenstruktur 2g beziehungsweise einen Abschnitt eines Wabenstreifens 13 im Detail. Der erste strukturierte halbwabenförmige Streifen 2e sowie der zweite strukturierte halbwabenförmige Streifen 2f sind über die duroplastische Berührungsstellen 2s, nachfolgend auch als "Schweissstellen" bezeichnet, gegenseitig fest miteinander verbunden.

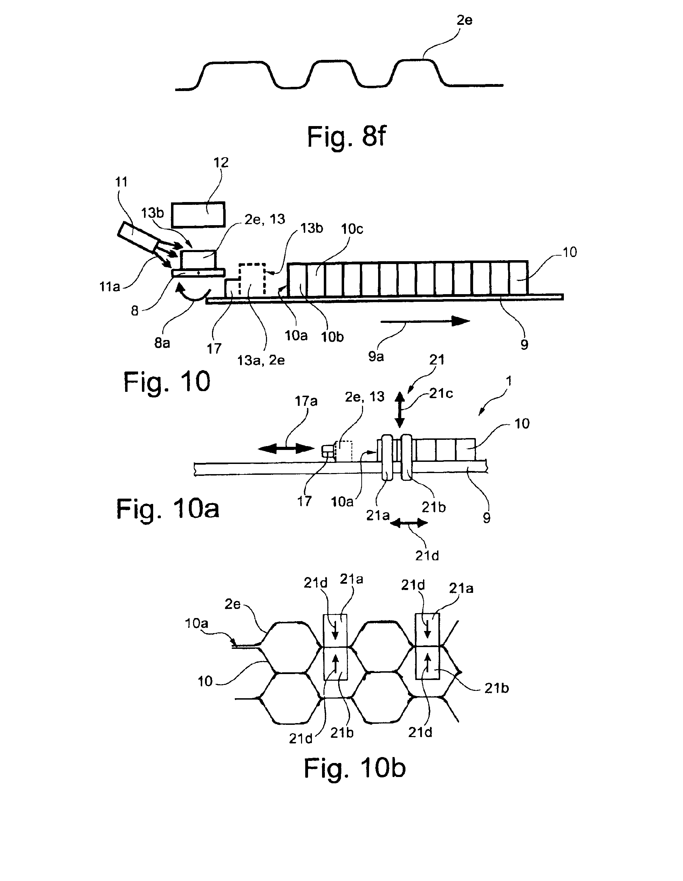

Die Figuren 5a und 5b zeigen Ausführungsbeispiele von ersten Prägerädern 4a, welche Prägezähne 4c mit in Umfangsrichtung rundlich verlaufender Geometrie aufweisen, sodass sich insbesondere an den Übergangsstellen von Prägezahn 4c zu Seitenfläche 4g und von Seitenfläche 4g zu Vertiefung 4d ein rund beziehungsweise bogenförmig verlaufender Übergang ergibt, ohne Knickstelle. Der bogenförmig verlaufende Übergang weist einen Krümmungsradius auf, der beispielsweise einen Wert im Bereich zwischen 3 mm bis 5 mm oder 3 bis 10 mm oder 3 bis 200mm aufweisen kann, abhängig auch vom Gesamtdurchmesser des ersten Prägerades 4a. Der maximale Wert des Krümmungsradius ist gegen oben offen und hängt ab vom Gesamtdurchmesser des ersten Prägerades 4a, indem ein grösserer Gesamtdurchmesser auch einen grösseren Krümmungsradius erlaubt. Im Ausführungsbeispiel gemäss Figur 5b fehlen in Umfangsrichtung gewisse Prägezähne 4c. Der in Figur 8f dargestellten Streifen 2e könnte beispielsweise mit einer Umformvorrichtung 4 geformt werden, welcher das in Figur 5b dargestellte erste Prägerad 4a sowie ein nicht dargestelltes zweites Prägerad 4b umfasst, wobei die Oberfläche des zweiten Prägerades 4b in Umfangsrichtung gegengleich zur Oberfläche des ersten Prägerades 4a ausgestaltet ist, um den in Figur 8f dargestellten strukturierten Streifen 2e zu formen.

Eine Umformvorrichtung 4 umfassend zwei ineinander greifende Prägeräder 4a, wie eines davon in Figur 5a dargestellt ist, weist den Vorteil auf, dass sich auf Grund der abgerundeten Prägezähne 4c strukturierte halbwabenförmige Streifen 2e ausbilden lassen, wie diese in den Figuren 6a oder 6c dargestellt sind. Diese strukturierten halbwabenförmigen Streifen 2e weisen im Übergangsbereich 2m keine Knickstelle 2n auf, sondern weisen im Übergangsbereich 2m eine Krümmung beziehungsweise einen bogenförmigen Verlauf auf, zum Beispiel eine Krümmung mit einem Krümmungsradius 2r, wobei der Krümmungsradius 2r beispielsweise einen Wert zwischen 3 mm bis 5 mm oder 3 bis 10 mm oder 3 bis 200 mm aufweisen kann.

Figur 6a zeigt eine perspektivische Ansicht eines strukturierten Streifens 2e welcher bogenförmige Übergangsbereiche 2m aufweist, das heisst Übergangsbereiche 2m ohne Knickstellen 2n. Figur 6c zeigt in einer Seitenansicht ein weiteres Ausführungsbeispiel eines strukturieren Streifens 2e mit einem wellenförmig verlaufenden Übergangsbereich 2k beziehungsweise einem bogenförmig beziehungsweise gekrümmt verlaufenden Übergangsbereichen 2m. Der strukturierte halbwabenförmige Streifen 2e weist ebenfalls obere Abschnitte 2h, untere Abschnitte 2i sowie Seitenflächen 2k auf. Der dargestellte Streifen 2e weist zudem Wendepunkte 2q auf, an welchem der eine bogenförmige Übergangsbereich 2m in den nächstfolgenden bogenförmigen Übergangsbereich 2m übergeht. Zwischen den beiden bogenförmigen Übergangsbereichen 2m könnte auch ein geradlinig verlaufender Abschnitt angeordnet sein, sodass zwischen nacheinander folgenden Übergangsbereichen 2m kein eindeutiger Wendepunkt 2q ausgebildet ist. Die in den Figur 6a und 6c dargestellten Streifen 2e weisen somit einen geschwungenen bzw. wellenförmigen Verlauf auf, das heisst einen Verlauf ohne Knickstellen.

Zum besseren Verständnis des Nachteils einer Knickstelle zeigt Figur 6b in einer Seitenansicht einen Teilabschnitt eines strukturieren Streifens 2e mit Knickstellen 2n. Solche strukturierten Streifen 2e mit Knickstellen 2n werden mit dem erfindungsgemässen Verfahren vorteilhafterweise nicht hergestellt. Duroplaste weisen den Nachteil auf, dass diese relativ hart und spröde sein können, und daher gegen Schlag, Stoss und Verbiegung anfällig sein können. Nachteilig an dem in Figur 6b dargestellten strukturierten Streifen 2e ist die Tatsache, dass eine Bewegung oder Belastung des Streifens 2e in Richtung 2o zur Folge hat, dass die Knickstellen 2n stark belastet werden, da die nacheinander folgenden Teilabschnitte des Streifens 2e sich auch in Bewegungsrichtung 2p gegenseitig bewegen, was z.B. eine Schwächung oder einen Bruch der Knickstellen 2n zur Folge hat. Ganz im Gegensatz dazu weist der in Figur 6a und 6c dargestellte, erfindungsgemässe strukturierte Streifen 2e mit bogenförmigen Übergangsbereichen 2m den Vorteil auf, dass sich bei einer Bewegung oder Belastung des Streifens 2e in Richtung 2o keine eindeutige Belastungsstelle ausbildet, weil der Streifen 2e an verschiedensten Stellen, ähnlich wie eine Feder verformbar ist. Bei einem strukturierten Streifen 2e mit wellen- bzw. bogenförmigen Übergangsbereichen 2m, wie zum Beispiel in den Figuren 6a und 6c dargestellt, ergeben sich im Übergangsbereich 2m keine Knickstellen 2n und somit auch keine Schwächungen oder Brüche. Ein strukturierter Streifen 2e mit bogenförmigen Übergangsbereichen 2m weist daher bezüglich Brüche ein wesentlich verbessertes Langzeitverhalten. Eine Sandwichplatte aufweisend einen Wabenkern mit wie in Figur 6a, 6c dargestellt, geschwungen oder gekrümmt verlaufenden strukturierten Streifen 2e, weist daher auch eine verbesserte Zugbelastung und eine verbesserte Vibrationsbelastung auf.

Figur 7a zeigt einen Abschnitt einer Wabenstruktur 2g beziehungsweise einen Abschnitt eines Wabenstreifens 13 im Detail, wobei diese aus strukturierten Streifen 2e,2f mit bogenförmigen Übergangsbereichen 2m ausgebildet ist. Der erste strukturierte Streifen 2e sowie der zweite strukturierte Streifen 2f sind über die duroplastischen Berührungsstellen 2s gegenseitig fest miteinander verbunden beziehungsweise verschweisst.

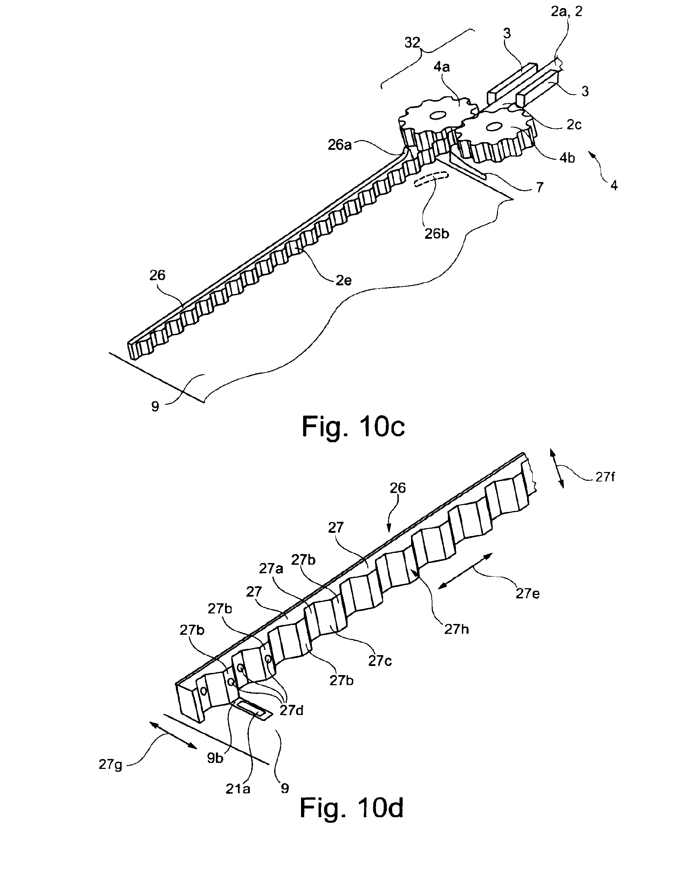

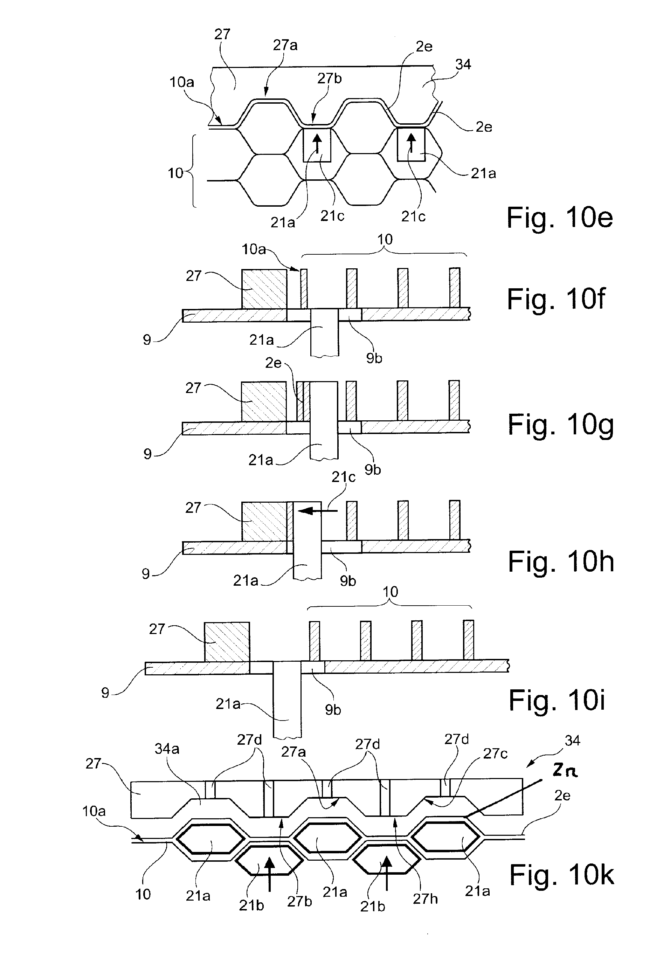

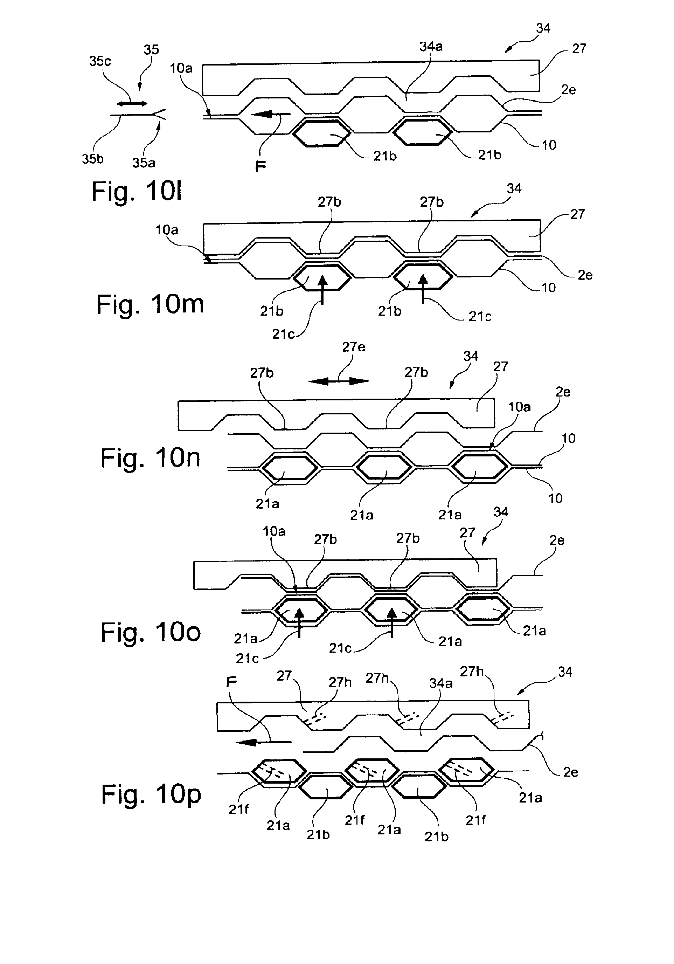

Figur 10 zeigt ein Detail der Herstellungsvorrichtung 1 in einer Seitenansicht. Die herzustellende Wabenstruktur 10 liegt auf einer Auflagefläche 9 auf, wobei die Auflagefläche 9 in Förderrichtung 9a bewegt wird. Die Wabenstruktur 2g wird während des Herstellungsprozesses jeweils vorerst auf die Auflage 8 geschoben, und dabei in einer bevorzugten Ausführungsform mit Hilfe einer Kühlvorrichtung 11 durch zuströmende Kühlluft 11a abgekühlt. Sobald die Wabenstruktur 2g die vorgesehene Länge erreicht hat wird diese mit der Schneidvorrichtung 7 abgetrennt, sodass ein Wabenstreifen 13 beziehungsweise ein strukturierter Streifen 2e ausgebildet wird. Der Wabenstreifen 13 weist eine Anschlagseite 13b auf, welche mit Hilfe einer Klebstoffzuführvorrichtung 12 beispielsweise mit einem Klebstoff versehen wird, wobei, sofern geklebt wird, insbesondere die mit der Wabenstruktur 10 in Berührung gelangenden Flächen mit Klebstoff versorgt werden. Die Auflage 8 ist in Drehrichtung 8a drehbar gelagert, so dass der Wabenstreifen 13a wie dargestellt um 90° gedreht und danach auf die Auflagefläche 9 gelegt wird. Ein Stössel 17 schiebt daraufhin den Wabenstreifen 13a in Verschiebungsrichtung 9a zur Anschlagkante 10a der Wabenstruktur 10 hin, bis der Wabenstreifen 13a mit seiner Anschlagseite 13b an der Anschlagkante 10a der Wabenstruktur 10 anliegt, so dass dieser an die Anschlagkante 10a der Wabenstruktur 10 angeklebt wird und der Wabenstreifen 13 zu einem Teil der Wabenstruktur 10 wird. Dieser somit angeklebte Wabenstreifen 10b bildet nun eine Anschlagkante 10a für einen nächstfolgenden Wabenstreifen 13a, so dass durch diesen fortlaufenden Prozess die Wabenstruktur 10 in Verschieberichtung 9a immer länger wird und derart die Wabenstruktur 10 gebildet wird.

Fig. 1a zeigt schematisch und dreidimensional ein weiteres Ausführungsbeispiel einer Vorrichtung 1 zur kontinuierlichen Herstellung einer Wabenstruktur 10. Im Unterschied zu dem in Figur 1 dargestellten Ausführungsbeispiel verwendet die in Figur 1a dargestellte Herstellungsvorrichtung 1 jeweils nur einen strukturierten halbwabenförmigen Streifen 2e, der in Förderrichtung F zugeführt wird, wobei der strukturierte Streifen 2e mit Hilfe der Umformvorrichtung 4 umfassend ein erstes und ein zweites Prägerad 4a,4b erzeugt wird. Sobald die vollständig erforderliche Länge des Streifens 2e auf die Auflage 8 eingetragen ist wird dieser mit der Schneidvorrichtung 7 geschnitten, und der strukturierte Streifen 2e danach an die Anschlagkante 10a der Wabenstruktur 10 angeschlagen. Der Umformvorrichtung 4 ist eine Vorratsrolle mit Streifenmaterial 2 vorgeordnet, wobei das Streifenmaterial 2 eine Erwärmungsvorrichtung 3 durchläuft, und danach als unstrukturierter Streifen 2c der Umformvorrichtung 4 zugeleitet ist, wonach der strukturierte Streifen 2e ausgebildet wird.

Das Anschlagen des strukturierten Streifens 2e an die Anschlagkante 10a erfolgt in einer möglichen Ausführungsform wie bereits in Figur 10 beschrieben dadurch, dass der strukturierte Streifen 2e der Auflage 8 zugeführt wird, danach der strukturierte Streifen 2e mit der Schneidvorrichtung 7 geschnitten wird und mit einem Klebstoff versehen wird, danach der strukturierte Streifen 2e auf die Auflagefläche 9 geschwenkt wird, und danach der strukturierte Streifen 2e, z.B. mit Hilfe eines Stössels 17 der Anschlagkante 10a zugeführt wird, sodass der strukturierte Streifen 2e an die Wabenstruktur 10 geklebt wird, sodass der soeben angeklebte strukturierte Streifen 2e nun eine Anschlagkante 10a für einen weiteren zuzuführenden strukturierten Streifen 2e ausbildet.

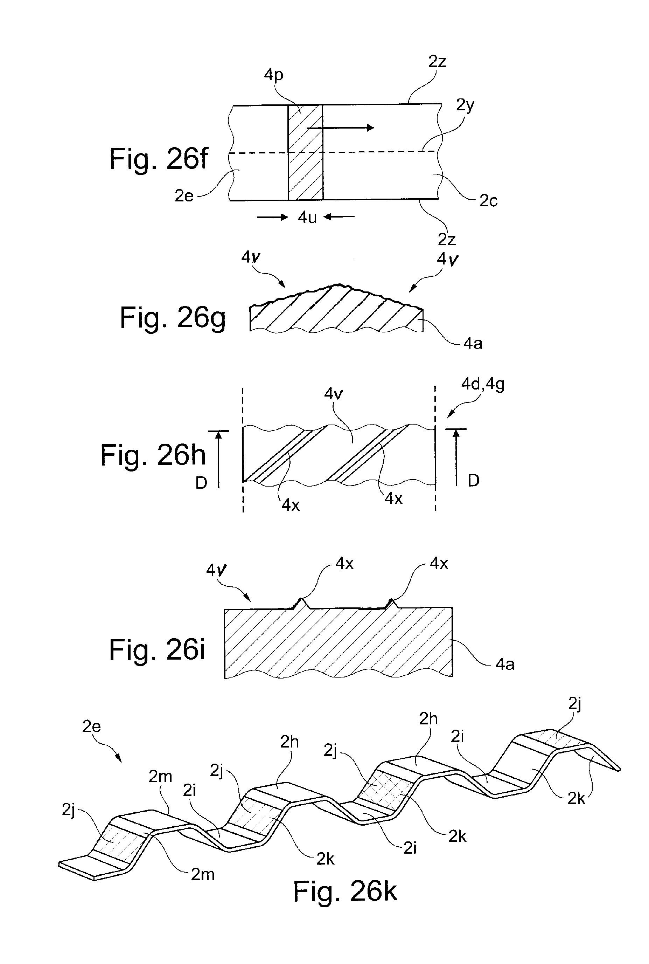

Ein einzelner strukturierter halbwabenförmiger Streifen 2e, beziehungsweise eine Mehrzahl von zumindest zwei gegenseitig bereits verbundener strukturierter halbwabenförmiger Streifen 2e, hierin auch als Wabenstreifen 13 bezeichnet, kann auf unterschiedlichste Weise der Anschlagkante 10a der Wabenstruktur 10 zugeführt werden. Figur 10a zeigt schematisch ein strukturierter Streifen 2e beziehungsweise einen Wabenstreifen 13, welcher auf einer Auflagefläche 9 aufliegt und von einem in Richtung 17a beweglichen Stössel 17 der Anschlagkante 10a zuführbar ist. Unterhalb der Auflagefläche 9 ist eine Anpressvorrichtung 21 angeordnet, welche Stempel 21a, 21b umfasst, die in vertikaler Richtung 21c und in horizontaler Richtung 21d verschiebbar gelagert sind. Figur 10b zeigt in einer Draufsicht das Anschlagen eines strukturierten Streifens 2e an die Anschlagkante 10a mit Hilfe der Anpressvorrichtung 21. Vorerst wird der strukturierte Streifen 2e an der Anschlagkante 10a der Wabenstruktur 10 zugeführt. Danach werden die Stempel 21a, 21b in vertikaler Richtung 21c angehoben, und danach in horizontaler Richtung 21d gegeneinander verpresst, sodass der strukturierte Streifen 2e an die Anschlagkante 10a gedrückt wird. Danach werden die Stempel 21a, 21b in horizontaler Richtung 21d leicht zurückbewegt, und danach in vertikaler Richtung 21c bewegt, bis diese unterhalb der Auflagefläche 9 angeordnet sind. Der strukturierte Streifen 2e ist danach mit der Wabenstruktur 10 verbunden, bildet ein Teil der Wabenstruktur 10, und bildet zudem die Anschlagkante 10a für einen nächstfolgenden, anzuschlagenden strukturierten Streifen 2e. An Stelle eines strukturierten Streifens 2e könnte auf dieselbe Weise auch ein Wabenstreifen 13 an die Anschlagkante 10a der Wabenstruktur 10 angeschlagen werden. Die in Figur 10b dargestellte Anordnung weist den Vorteil auf, dass die Anpressvorrichtung 21 über die Stempel 21a,21b eine derartige Kraft auf die Anschlagkante 10a sowie den strukturierten Streifen 2e ausüben kann, sich der strukturierte Streifen 2e gut mit der Anschlagkante 10a verbinden. In einer besonders vorteilhaften Ausgestaltung ist für diese Verbindung kein Klebstoff erforderlich, weil der strukturierte Streifen 2e Kontaktabschnitte 2i,2h aufweist, entlang welchen die Kondensationsreaktion des Bindemittels nicht oder nur teilweise bewirkt wurde, sodass sich zwischen der Anschlagkante 10a und dem diese berührenden strukturierten Streifen 2e eine duroplastische Verbindung ausbildet. Um die Kondensationsreaktion auszulösen sind die Stempel 21a, 21b beheizbar und unter Druck gegeneinander pressbar, beispielsweise bei einer Temperatur zwischen 120°C und 280°C und mit einem Druck zwischen 10 Bar und 300 Bar, um die Anschlagkante 10a sowie den strukturieren Streifen 2e an der angreifenden Stelle zu erwärmen, das Bindemittel zu einem Duroplast zu vernetzen, und Kondensationsprodukte aus dem Streifen 2e zu pressen, um derart über eine duroplastische Verbindung den Steifen 2e mit der Anschlagkante 10a zu verschweissen. Die zum Streifen 2e und/oder zur Anschlagkante 10a hin ausgerichtete Stirnseite der Stempel 21a, 21b weisen in einer besonders vorteilhaften Ausgestaltung eine strukturierte Oberfläche auf, beispielsweise die in den Figuren 26g, 26h oder 26i dargestellte Struktur. Dies bewirkt, wie in Figur 7 dargestellt, eine strukturierte beziehungsweise geprägte Schweissstelle 2s1, was den Vorteil ergibt, dass die Verbindungsstelle 2s der beiden Streifen 2e,2f besonders gut zusammenhält, und dass die Verbindungsstelle 2s auf Grund der Struktur bzw. der Prägung bessere mechanische Eigenschaften wie z.B. eine erhöhte Steifigkeit aufweist.

Die in Figur 1a dargestellte Herstellungsvorrichtung 1 für Wabenstrukturen 10 umfasst insbesondere eine Zuführvorrichtung 32, eine Anschlagvorrichtung 34, eine Ansteuer- und Regelungsvorrichtung 30 sowie eine Auflagefläche 9. Die Zuführvorrichtung 32 umfasst insbesondere eine Umformvorrichtung 4, eine Erwärmungsvorrichtung 3, sowie eine Schneidvorrichtung 7. Die Anschlagvorrichtung 34 umfasst alle erforderlichen Mittel, um den strukturierten Streifen 2e an die Wabenstruktur 10 anzuschlagen, damit der strukturierte Streifen 2e zu einem Teil der Wabenstruktur 10 wird. Die für die Anschlagvorrichtung 34 erforderlichen Mittel werden in nachfolgenden Figuren dargestellt.

Die Regelungsvorrichtung 30 ist für den Betrieb der Herstellungsvorrichtung 1 von besonderer Bedeutung. In einer möglichen Ausgestaltung regelt die Regelungsvorrichtung 30 die von der Erwärmungsvorrichtung 3 erzeugte Wärme sowie die Drehzahl der Umformvorrichtung 4. Die Drehzahl der Umformvorrichtung 4 ist von besonderer Bedeutung, da diese einerseits die Eintraggeschwindigkeit des strukturierten Streifens 2e in Förderrichtung F in die Anschlagvorrichtung 34 bestimmt. Zudem bestimmt die Drehzahl der Umformvorrichtung 4 die Abzugsgeschwindigkeit des Streifenmaterials 2 von der Vorratsrolle sowie die Geschwindigkeit des unstrukturierten Streifens 2c. Diese Geschwindigkeit bestimmt zudem die Verweildauer des unstrukturierten Streifens 2c in der Erwärmungsvorrichtung 3. In einer weiteren vorteilhaften Ausgestaltung weist die Umformvorrichtung 4 zudem eine Heizvorrichtung auf, welche über die Regelungsvorrichtung 30 ansteuerbar ist. In einer weiteren vorteilhaften Ausgestaltung ist zudem die Anpresskraft zwischen den beiden Prägerädern 4a, 4b über die Regelungsvorrichtung 30 ansteuerbar.

Im dargestellten Ausführungsbeispiel ist die Regelungsvorrichtung 30 über eine elektrische Leitung 31a mit einem nicht dargestellten Geschwindigkeitssensor verbunden, um die Geschwindigkeit des unstrukturierten Streifens 2c zu messen. Eine elektrische Leitung 31b ist mit der Erwärmungsvorrichtung 3 verbunden, um diese mit einem Sollwert für die abzugebende Wärmeenergie zu versorgen und/oder um die Temperatur in der Erwärmungsvorrichtung und/oder des unstrukturierten Streifens 2c zu messen. Eine elektrische Leitung 3c ist mit der Umformvorrichtung 4 verbunden, um die Drehzahl der Prägeräder 4a,4b anzusteuern, und um eventuell den gegenseitigen Anpressdruck der Prägeräder 4a,4b anzusteuern und um eventuell eine von den Prägerädern 4a,4b abgegebene Wärme anzusteuern. Eine elektrische Leitung 31d steuert einen nicht dargestellten Motor an, welche die Drehbewegung 8a der Auflage 8 ansteuert. Eine elektrische Leitung 31e steuert einen nicht dargestellten Motor an, welcher die Verschiebungsgeschwindigkeit der Auflagefläche 9 in Bewegungsrichtung 9a ansteuert. Eine elektrische Leitung 31f steuert eine Schneidvorrichtung 7 an, um den strukturierten Streifen 2e zu durchtrennen. Eine elektrische Leitung 31g erfasst ein Signal eines Sensors 24, welcher die Lage des strukturierten Streifens 2e erfasst, und welcher insbesondere den vollständigen Eintrag des Streifens 2e erfasst. Eine elektrische Leitung 31h steuert eine möglicherweise vorhandene Schneid- oder Stanzvorrichtung 23 an, welche das Streifenmaterial 2 durch Schneiden oder Stanzen in seiner Form verändert. Die Herstellungsvorrichtung 1 kann noch eine Vielzahl weiterer Sensoren und/oder Aktuatoren umfassen, welche nicht im Detail dargestellt sind, und welche insbesondere von der Regelungsvorrichtung 30 überwachbar und/oder ansteuerbar sind.

Figur 10c offenbart Teilkomponenten einer besonders vorteilhaften Herstellungsvorrichtung 1. Die Zuführvorrichtung 32, umfassend die Erwärmungsvorrichtung 3, die Umformvorrichtung 4 sowie die Schneidvorrichtung 7 ist derart ausgestaltet und angeordnet, dass der strukturierte Streifen 2e derart ausgerichtet der Auflagefläche 9 zugeführt wird, dass dieser nicht mehr wie in den Figuren 1 und 1a dargestellt gedreht werden muss, sondern bereits die erforderliche Lage zum Anschlagen an eine Anschlagkante 10a aufweist. Der strukturierte Streifen 2e wird über die Breite der Auflagefläche 9 eingetragen, wobei der Streifen 2e eine aufrechte Lage aufweist, beziehungsweise wobei der Streifen 2e senkrecht zur Auflagefläche 9 verläuft. In einer vorteilhaften Ausgestaltung ist eine Leitvorrichtung 26 vorgesehen, welche die Bewegungsfreiheit des strukturierten Streifens 2e zumindest einseitig begrenzt, sodass dieser sicher und vorzugsweise etwa geradlinig verlaufend über die Auflagefläche 9 eingetragen wird. In einer vorteilhaften Ausgestaltung umfasst die Leitvorrichtung 26 zudem einen sich zum Beispiel trichterförmig erweiternden Eingangsbereich 26a, 26b, wobei vom Eingangsbereiche 26b nur die Fussspur dargestellt ist.

Figur 10d zeigt ein weiteres Ausführungsbeispiel einer Leitvorrichtung 26, die als Anschlag 27 ausgestaltet ist. Der Anschlag 27 weist auf der dem strukturierten Streifen 2e zugewandten Seite vorzugsweise eine derartige Struktur auf, dass diese dem Verlauf des strukturierten Streifens 2e entspricht, das heisst, dass die dem strukturierten Streifen 2e zugewandte Anschlagseite 27h Tiefstellen 27a, Hochstellen 27b und geneigten Stellen 27c aufweist, welche dem geometrischen Verlauf des strukturierten Streifens 2e entsprechen. In einer vorteilhaften Ausgestaltung weist die Anschlagseite 27h zudem Löcher 27d auf, durch welche ein gasförmiges Fluid ausgelassen oder angesaugt werden kann. In einer weiteren vorteilhaften Ausgestaltung weist die Auflagefläche 9 Durchbrechungen 9b auf, wobei nur eine Durchbrechung 9b dargestellt ist, wobei vorzugsweise unmittelbar vor jeder Tiefstelle 27a und unmittelbar vor jeder Hochstelle 27b eine Durchbrechung 9b angeordnet ist. In der Durchbrechung 9b ist vorzugsweise ein Stempel 21 angeordnet, welcher nachfolgend noch im Detail beschrieben wird.

In einer weiteren vorteilhaften Ausgestaltung ist die Leitvorrichtung 26 beziehungsweise der Anschlag 27 zumindest in Verlaufsrichtung 27e der Leitvorrichtung 26 oder zumindest in vertikaler Richtung 27b oder zumindest in Verlaufsrichtung 27g der Auflagefläche 9 beweglich gelagert.

Figur 10e zeigt einen Ausschnitt einer Wabe 10 mit Anschlagkante 10a, wobei ein strukturierter Streifen 2e mit dieser Anschlagkante 10a verbunden wird. Dazu wird ein Stempel 21a von unterhalb der Auflagefläche 9 hochgefahren, sodass die Anschlagkante 10a sowie der strukturierte Streifen 2e zwischen die Hochstelle 27b des Anschlags 27 und den Stempel 21a zu liegen kommt, wobei der Stempel 21a eine Anpresskraft in Bewegungsrichtung 21c bewirkt, und falls erforderlich eine Erwärmung bewirkt, um eine gegenseitige Verbindung der jeweils zwischen der Hochstelle 27b und dem Stempel 21a liegenden Abschnitte von Anschlagkante 10a und strukturiertem Streifen 2e zu bewirken. Dieses Anschlagen des strukturierten Streifens 2e an die Anschlagkante 10a wird in den Figuren 10f bis 10i in vier aufeinander folgenden Verfahrensschritte im Detail erklärt. In Figur 10f befindet sich der Stempel 21a unterhalb der Oberfläche der Auflagefläche 9. In Figur 10g wird der vorzugsweise beheizbare Stempel 21a durch die Durchbrechung 9b verlaufend hochgefahren und zudem wird der strukturierte Streifen 2e eingetragen. In Figur 10h wird der Stempel 21a in Richtung 21c bewegt und der Streifen 2e mit der Anschlagkante 10a verschweisst, in Figur 10i wird der Stempel 21a wieder nach unten gefahren.

Die Figuren 10k bis 10p zeigen in einem weiteren Ausführungsbeispiel ein weiteres mögliches Verfahren zum Anschlagen eines strukturierten Streifens 2e an die Anschlagkante 10a im Detail. In diesem Ausführungsbeispiel sind die Stempel 21 a und der Anschlag 27 kantig ausgestaltet. Ein noch plastisch verformbarer, das heisst nicht vollständig polymerisierter Streifen 2e mit wie in Figur 6a oder 6c dargestellt ursprünglich rundlichen Übergangsbereiche 2m, kann mit Hilfe der Stempel 21a, 21b und dem Anschlag 27 derart verformt beziehungsweise gepresst werden, dass dieser Streifen 2e wie in Figur 10k dargestellt, eine eckige oder im Wesentlichen eckige Knickstelle 2n aufweist, wie in Figur 6b dargestellt. Die erfindungsgemässe Vorrichtung erlaubt es somit auch eckige Wabenstrukturen herzustellen, bzw. Wabenstrukturen, mit Knickstellen 2n. Das in den Figuren 10k bis 10p dargestellte Ausführungsbeispiel ist im Wesentlichen zur Herstellung von eckigen Wabenstrukturen als auch zur Herstellung von wellenförmigen Wabenstrukturen geeignet. Zur Herstellung von wellenförmigen Wabenstrukturen müssten die Stempel 21a,21b und der Anschlag 27 jedoch wie beispielsweise in Figur 10e dargestellt ausgestaltet sein.

Figur 10k zeigt in einer Draufsicht die zum Anschlagen erforderlichen Elemente. Der Anschlag 27 umfasst Löcher 27d für ein gasförmiges Fluid. Aus den Löchern 27d kann ein Gas strömen, oder über die Löcher 27d kann Gas angesaugt werden. Die Anschlagseite 27h weist Tiefstellen 27a, Hochstellen 27b und geneigten Stellen 27c aufweist, wobei gegenüber den Tiefstellen 27a ein erster Satz von Stempeln 21a angeordnet ist, und wobei gegenüber den Hochstellen 27b ein zweiter Satz von Stempeln 21b angeordnet ist. Zudem ist die Wabenstruktur 10 mit Anschlagkante 10a sowie ein eingetragener strukturierter Streifen 2e dargestellt. In Figur 10k ist die von oben erkennbare Anordnung der Stempel 21a, 21b dargestellt, wobei nicht dargestellt ist, ob sich die Stempel 21a, 21b über die Auflagefläche 9 vorstehen.

Die Figuren 10l bis 10o zeigen nun ein mögliches Anschlagverfahren im Detail. Die Stempel 21b stehen über die Auflagefläche 9 vor und sind unmittelbar hinter der Anschlagkante 10a der Wabenstruktur 10 angeordnet. Zwischen der Anschlagkante 10a und dem Anschlag 27 ist ein Zwischenraum ausgebildet, in welchen der strukturierte Streifen 2e eingetragen wurde. Im nachfolgenden, in Figur 10m dargestellten Verfahrensschritt, werden die beiden Stempel 21b in Richtung 21c zum Anschlag 27 hin bewegt, sodass die Anschlagkante 10a der Wabenstruktur 10 sowie der strukturierte Streifen 2e entlang der Länge des Stempels 21b beziehungsweise entlang der Länge der Hochstelle 27b gegeneinander gepresst werden. Daraufhin werden die Stempel 21b nach unten gefahren und ein gasförmiges Fluid wie Luft aus den Löchern 27d geblasen, sodass die Anschlagkante 10a der Wabenstruktur 10 vom Anschlag 27 weg geschoben wird. Figur 10n zeigt einen nachfolgenden Verfahrensschritt, bei welchem die Stempel 21a hochgefahren sind und in die Wabenstruktur 10 eingreifen. Der gesamte Anschlag 27 ist derart nach links verschoben, dass die Hochstellen 27b des Anschlages 27 gegenüber den Stempeln 21a zu liegen kommen. Zudem wird ein strukturierter Streifen 2e zwischen dem Anschlag 27 sowie der Anschlagkante 10a eingetragen. Sobald dieser Eintrag erfolgt ist werden die Stempel 21a in Richtung 21c zum Anschlag 27 hin verschoben, wobei die Hochstellen 27b den Stempeln 21a gegenüberliegend angeordnet sind, um damit den strukturierten Streifen 2e entlang des Abschnittes der Stempel 21 an die Anschlagkante 10a zu pressen und so den strukturierten Streifen 2e mit der Wabenstruktur 10 zu verbinden. Danach werden die Stempel 21c nach unten verfahren und der Anschlag 27, wie in Figur 10l dargestellt, in Bewegungsrichtung 27e wieder nach rechts verfahren, sodass mit dem in Figur 10l dargestellten Zustand fortgefahren werden kann.

Figur 10l zeigt die Anschlagvorrichtung 34 in einer möglichen Eintragsstellung, während welcher der strukturierte Streifen 2e in Förderrichtung F eingetragen wird. Figur 10p zeigt die Anschlagvorrichtung 34 in einer weiteren möglichen Eintragsstellung, während welcher der strukturierte Streifen 2e in Förderrichtung F eingetragen wird. Dabei sind die Stempel 21a in Hochstellung, sodass der strukturierte Streifen 2e zwischen den Stempeln 21a und dem Anschlag 27 eingeführt wird, und, falls erforderlich, durch die Stempel 21a und den Anschlag 27 geführt wird. Es kann sich als vorteilhaft erweisen die Stempel 21a und/oder den Anschlag 27 mit Fluid leitenden Kanälen 27h, 21f zu versehen, welche derart angeordnet sind, dass ein aus diesen Kanälen 27h, 21f ausströmendes gasförmiges Fluid eine in Förderrichtung F wirkende Kraft auf den strukturierten Streifen 2e bewirkt. Die Kanäle 27h, 21f verlaufen innerhalb des Anschlages 27 beziehungsweise innerhalb des Stempels 21a, weshalb die Kanäle 27a, 21f nur andeutungsweise dargestellt sind. Das ausströmende gasförmige Fluid kann den strukturierten Streifen 2e je nach Erfordernis zudem erwärmen oder abkühlen, in dem die Temperatur und/oder die Ausströmgeschwindigkeit des gasförmigen Fluides entsprechend gewählt wird.

In Figur 10l ist eine weitere Möglichkeit offenbart um den Eintrag des strukturierten Streifens 2e mechanisch zu unterstützen. Dazu wird eine Einzugsvorrichtung 35 verwendet, welche derart ausgestaltet ist, dass diese den vorderen Teil oder die Spitze des Streifens 2e erfassen kann, und den Streifen 2e in Eintragsrichtung F durch das geöffnete Fach ziehen kann, im dargestellten Ausführungsbeispiel von rechts nach links, indem der Streifen 2e auf der rechten Seite erfasst wird und nach von der Einzugsvorrichtung 35 nach links durch das geöffnete Fach gezogen wird. Die Einzugsvorrichtung 35 ist im dargestellten Ausführungsbeispiel als ein Greifer 35a ausgestaltet, welcher die Spitze des Streifens 2e erfassen kann. Der Greifer 35a ist an einer Stange 35b befestigt, welche in Richtung 35c verschiebbar ist, derart, dass der Greifer 35a bis zum Eingangsbereich des geöffneten Fachs, d.h. im dargestellten Ausführungsbeispiel bis zur rechten Seite der Anschlagvorrichtung 34 verschiebbar ist, sodass der Greifer 35a die Spitze des Streifens 2e erfassen kann, und den Streifen 2e vollständig durch das geöffnete Fach ziehen kann, indem der Greifer 35a in Eintragsrichtung 21 bewegt wird. Nach dem vollständigen Eintrag des Streifens 2e lässt der Greifer 35a die Spitze des Streifens 2e los, sodass der Greifer 35a für den Eintrag eines nachfolgenden Streifens 2e bereit ist. An Stelle eines Greifers 35a könne auch eine andere Vorrichtung verwendet werden, welche in der Lage ist die Spitze oder den vorderen Abschnitt des Streifens 2e zu halten, zum Beispiel könnte die Vorrichtung ein Vakuum erzeugen, das den Streifen 2e hält.

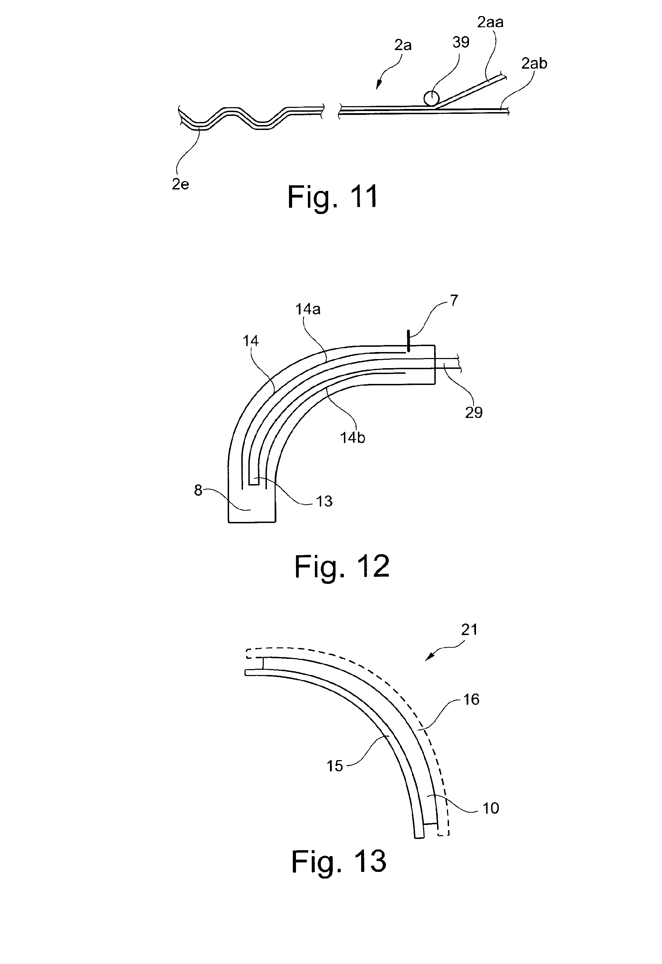

Das Streifenmaterial 2 könnte auch aus einer Mehrzahl von übereinander angeordneten, vorimprägnierten Papierbahnen bestehen. Figur 11 zeigt schematisch ein Ausführungsbeispiel einer Vorrichtung, welche zwei Teilstreifen 2aa, 2ab aus imprägnierten Papierbahnen zu einem Streifenmaterial 2a zusammen führt, aus welchem anschiessend mit einer nicht dargestellten Umformvorrichtung 4 ein halbwabenförmiger Streifen 2e gebildet wird. Das Streifenmaterial 2a kann auch aus einer Vielzahl von übereinander liegend angeordneten Teilstreifen 2aa, 2ab erzeugt werden, um insbesondere ein dickeres Streifenmaterial 2a zu bilden.

Figur 12 zeigt schematisch eine Draufsicht auf eine mögliche Ausführungsform einer Auflage 8, welche im Unterschied zu der in den Figuren 1 und 10 dargestellten Ausführungsform jedoch nicht linear verläuft sondern eine gekrümmt verlaufende Führungsvorrichtung 14 mit Seitenführungen 14a, 14b aufweist, so dass die noch flexible Wabenstruktur 2g während dem Einführen in die Führungsvorrichtung 14 eine Krümmung erfährt. Der sich nach dem Schneiden mit der Schneidvorrichtung 7 ergebende Wabenstreifen 13 weist somit einen gekrümmten Verlauf auf.

Figur 13 zeigt eine Seitenansicht einer Verbundplatte 21 umfassend eine Wabenstruktur 10 gebildet aus einer Vielzahl des in Figur 12 dargestellten Wabenstreifens 13, wobei die Wabenstruktur 10 beidseitig je mit einer unteren Deckplatte 15 und einer oberen Deckplatte 16 verbunden ist.

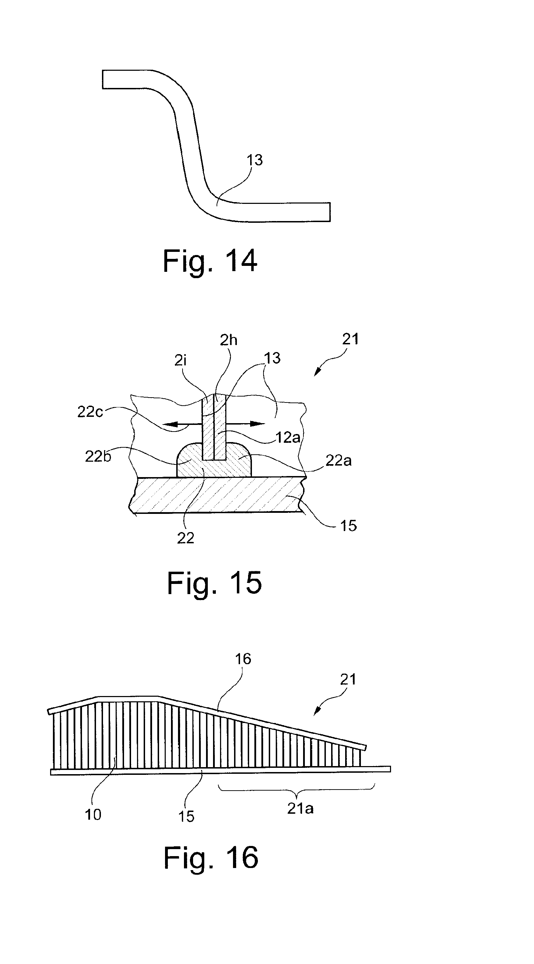

Sofern die in die Führungsvorrichtung 14 zugeführte Wabenstruktur 2g noch relativ weich und verformbar ist, können Wabenstrukturen 2g und somit auch Wabenstreifen 13 mit unterschiedlichsten zwei- oder dreidimensionalen Verläufen ausgebildet werden, wobei der Verlauf des Wabenstreifens 13 durch die entsprechende verlaufende Führungsvorrichtung 14 bestimmt wird. Figur 14 zeigt ein weiteres Ausführungsbeispiel eines Wabenstreifens 13. Dieser kann sich in unterschiedlichsten Formen in zwei- oder dreidimensionaler Richtung erstrecken und kann danach wie in Figur 10 dargestellt jeweils an eine Anschlagkante 10a der Wabenstruktur 10 angeschlagen werden. Dabei muss natürlich die Unterlage 9 entsprechend dem Verlauf der Wabenstruktur 10 ausgestaltet sein. In einer vorteilhaften Ausführungsform wird als Unterlage 9, wie in Figur 13 dargestellt, die untere Deckplatte 15 der herzustellenden Verbundplatte 21 verwendet. Es ist somit möglich Wabenstrukturen 10 und somit auch Verbundplatten 21 in unterschiedlichster zwei- oder dreidimensionaler Form herzustellen.

Figur 15 zeigt eine Detailansicht eines Schnittes durch eine Verbundplatte 21 mit Wabenstreifen 13. Der im Schnitt dargestellte Wabenstreifen 13 ist wie in Figur 7 dargestellt aus zwei Streifen 2e,2f hergestellt, welche über die gegenseitigen Berührungsflächen 2h,2i gegenseitig fest miteinander verbunden sind. Der Wabenstreifen 13 ist über ein fliessfähiges Verbindungsmittel 22, insbesondere ein Klebstoff, fest mit der unteren Deckplatte 15 verbunden. In einer besonders vorteilhaften Ausführungsform ist nicht nur die der Deckplatte 15 zugewandte Stirnseite des Wabenstreifens 13 mit Klebstoff 22 versehen, sondern es werden seitliche wulstförmige Klebestellen 22a, 22b ausgebildet, welche insbesondere den Vorteil ergeben, dass der Wabenstreifen 13 bezüglich in Verlaufsrichtung 22c wirkenden Kräften besser gehalten ist. Die seitlich angeordneten Klebestellen 22a, 22b erhöhen somit die Festigkeit der Verbundplatte 21, insbesondere bezüglich in Richtung 22c wirkenden Scherkräften.

Figur 16 zeigt eine Seitenansicht eines weiteren Ausführungsbeispieles einer Verbundplatte 21 mit Wabenstruktur 10 sowie mit unterer Deckplatte 15 und oberer Deckplatte 16. Diese Wabenstruktur 10 ist aus einer Vielzahl nebeneinander liegend angeordneter Wabenstreifen 13 mit teilweise unterschiedlicher Breite gebildet, wobei die Breite der Wabenstreifen 13 derart gewählt wurde, dass die Wabenstruktur 10 einen variierenden Höhenverlauf aufweist. In einer vorteilhaften Ausgestaltung könnte das Streifenmaterial 2 zum Beispiel eine zunehmende Breite B aufwiesen, sodass mit der in den Figuren 1 und 5 dargestellten Herstellungsvorrichtung 1 auf einfache Weise der in Figur 16 dargestellte Abschnitt 21a der Verbundplatte 21 hergestellt werden kann, indem die hergestellten Wabenstreifen 13 zunehmend breiter werden.

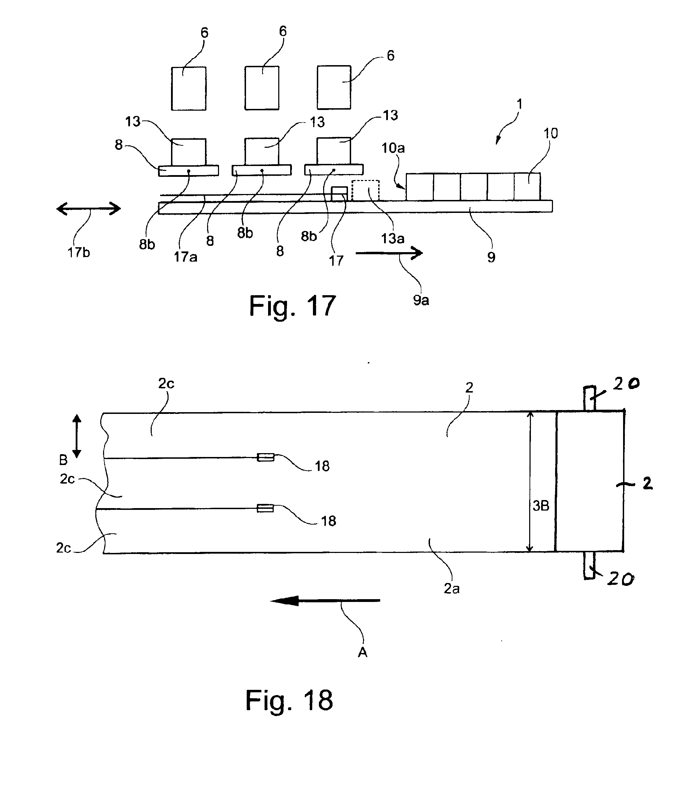

Figur 17 zeigt schematisch ein weiterer Ausführungsbeispiel einer Herstellvorrichtung 1, welche im Unterschied zu der in Figur 10 dargestellten Herstellvorrichtung 1 gleichzeitig drei Wabenstreifen 13 herstellen kann, indem diese drei separate Auflagen 8 und jeweils drei separate, vorgelagerte Verbindungsvorrichtungen 6 sowie drei separate Umformvorrichtungen 4,5 aufweist. Die hergestellten Wabenstreifen 13 werden nacheinander als Wabenstreifen 13a auf das Förderband 9 gelegt, wo sie einzeln mit Hilfe eines in Richtung 17b beweglichen Stössels 17 zur Anschlagkante 10a der Wabenstruktur 10 hin verschoben werden und dort an die Wabenstruktur 10 angeklebt werden. Der Stössel 17 ist über eine Stange 17a mit einer Antriebsvorrichtung verbunden. Die Herstellvorrichtung 1 ist in einer Vielzahl von Möglichkeiten ausgestaltbar, so auch in Ausführungsformen mit nur zwei oder vier oder noch mehr gleichzeitig herstellbaren Wabenstreifen 13. Eine derartig ausgestaltete Herstellvorrichtung 1 erlaubt ein besonderes schnelles und leistungsfähiges Herstellen der Wabenstruktur 10.

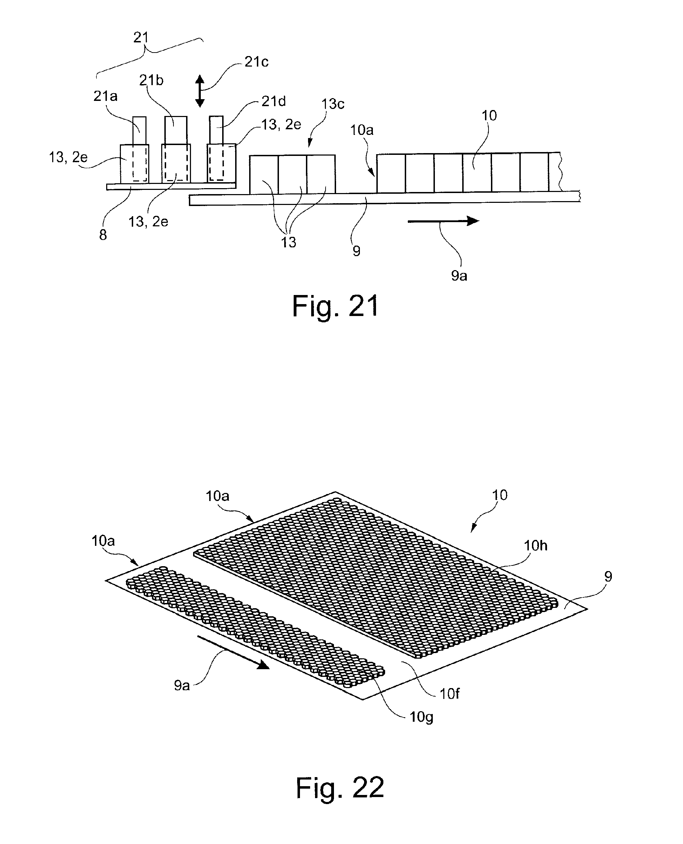

Anstelle des Stössels 17 oder in Ergänzung zum Stössel 17 können weitere Vorrichtungen hilfreich sein, welche ein sicheres Anfügen und Einfügen der Wabenstreifen 13 in die Wabenstruktur 10 ermöglichen. Als mögliches Ausführungsbeispiel einer derartigen Vorrichtung ist in Figur 21 eine Anpressvorrichtung 21 dargestellt, welche Stempel 21a, 21b und 21d umfasst, die derart ausgestaltet sind, dass diese über eine Bewegung in Richtung 21c in den Innenraum 21 der Wabenstreifen 13 eingreifen können, um zumindest zwei benachbart angeordnete Wabenstreifen 13 gegenseitig aneinander zu pressen und dadurch zu verbinden. Vorzugsweise weist die Anpressvorrichtung 21 senkrecht zur dargestellten Ansicht eine Vielzahl von nebeneinander angeordneten Stempeln 21a, 21b, 21c auf, vorzugsweise so viele, dass in jeden Innenraum 21 eines Wabenstreifens 13 ein Stempel 2 1 a, 21b, 21c eingreifen kann. In einer vorteilhaften Ausgestaltung könnte auch auf den Stössel 17 verzichtet werden, indem die Anpressvorrichtung 21 zudem derart bewegt wird, dass die Gruppe der zumindest zwei miteinander verbundenen Wabenstreifen der Anschlagkante 10a wird und mit der Wabenstruktur 10 verbunden wird.

Für die in Figur 17 dargestellte Herstellvorrichtung 1 kann es sich, wie in Figur 18 dargestellt, als besonders vorteilhaft erweisen ein Streifenband 2 mit der dreifachen Breite 3B zu verwenden, das in Richtung A abgezogen wird und mit Hilfe von zwei zweiten Schneidvorrichtungen 18 geschnitten wird, sodass nachfolgend drei Streifen 2c der Breite B zur Verfügung stehen, welche je einer Erwärmungsvorrichtung 3 und den nachgelagerten Umformvorrichtungen 4,5 sowie den nachgelagerten Verbindungsvorrichtungen 7 zugeführt werden. Die Anordnung umfasst vorteilhafterweise eine Haltevorrichtung 20 für eine Rolle aus Streifenmaterial 2 der Gesamtbreite 3B, sowie umfasst eine Mehrzahl von zweiten Schneidvorrichtungen 18 zum synchronen Schneiden von Streifenmaterial 2 auf eine Breite B für jede der nachgelagerten Herstellungsvorrichtungen 32 aus der Rolle von Streifenmaterial 2. Es könnten beispielsweise 10, 20, 30 oder 40 zweite Schneidvorrichtungen 18 vorgesehen sein, um eine entsprechende Anzahl Streifen 2c gleichzeitig zu erzeugen. Vorteilhafterweise wären dann für jeden der Streifen 2c eine Umformvorrichtung 4,5 nachgelagert angeordnet, um alle Streifen 2c parallel zu duroplastischen, halbwabenförmigen Streifen 2e,2f zu formen.

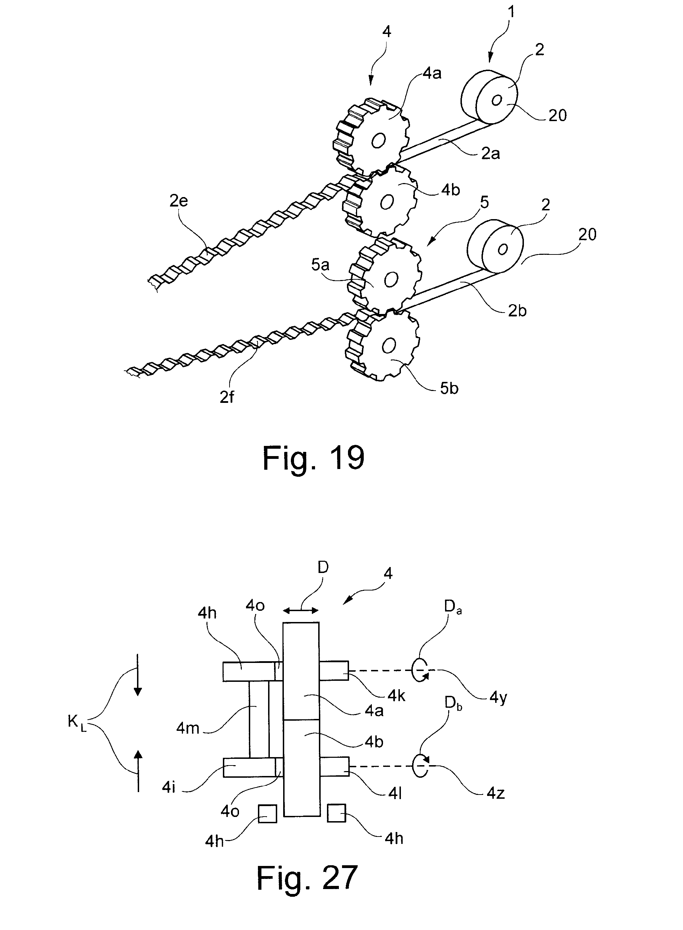

Figur 19 zeigt ein weiteres Ausführungsbeispiel einer Herstellungsvorrichtung 1. Diese Herstellungsvorrichtung 1 weist zwei Zuführungen 20 auf, an welchen ein auf Rollen gespeichertes Streifenmaterial 2 gelagert ist. Das Streifenmaterial 2a,2b wird von der Rolle abgezogen und der Umformvorrichtung 4 beziehungsweise der Umformvorrichtung 5 zugeführt, um strukturierte Streifen 2e, 2f zu erzeugen. Die in Figur 19 dargestellte Herstellungsvorrichtung 1 ist beispielsweise zur Herstellung von feuerfesten oder brandfesten Wabenstrukturen 10 geeignet. Dazu wird das Streifenmaterial 2, 2a, 2b mit einem Silikat versehen, indem das Streifenmaterial 2, 2a, 2b mit einem Silikat, beispielsweise einem Zweikomponenten-Silikatharz getränkt wird. Als Streifenmaterial 2, 2a, 2b ist beispielsweise ein Papier, beispielsweise Zellulose. Das Streifenmaterial 2, 2a, 2b wird entweder mit Silikat getränkt, bevor dieses auf der Rolle gespeichert wird, oder das Streifenmaterial 2 wird nach dem Abziehen von der Rolle mit Silikat versehen, indem zum Beispiel die Streifenmaterialien 2a, 2b durch eine Silikatflüssigkeit geleitet werden, bevor diese den Umformvorrichtungen 4,5 zugeführt werden. Die Wabenstruktur 10 wird ansonsten wie mit Figur 1 beschrieben hergestellt, indem die beiden strukturierten Streifen 2e,2f in einer Verbindungsvorrichtung 6 verbunden werden, danach ein Wabenstreifen 13 erzeugt wird, und dieser an die Wabenstruktur 10 angeklebt wird. Die Umformvorrichtungen 4, 5 sowie die strukturierten Streifen 2e,2f sind nur schematisch dargestellt, weshalb die abgerundeten Zähne der Prägeräder 4a, 4b sowie der wellenförmige Verlauf des strukturierten Streifens 2e, 2f nicht sichtbar sind.

In den dargestellten Ausführungsbeispielen sind die Heizrollen 3a-3f und/oder die Prägeräder 4a,4b,5a,5b und/oder die Führungsräder 6a,6b jeweils etwa gleich breit ausgestaltet wie das Streifenmaterial 2. Es kann sich jedoch als vorteilhaft erweisen die genannten Rollen und Räder relativ breit auszugestalten, zum Beispiel 10 cm oder sogar 25 cm breit, damit ein Streifenmaterial 2 unterschiedlicher Breite von bis zu 10 cm Breite beziehungsweise von bis zu 25 cm Breite verarbeitet werden kann, ohne die Rollen und Räder auszuwechseln. Die geometrische Ausgestaltung der Struktur der Streifen 2e,2f kann auf einfache Weise dadurch geändert werden, dass die Prägeräder 4a,4b,5a,5b der Umformvorrichtungen 4,5 ersetzt werden mit Prägerädern 4a,4b,5a,5b, die derart ausgestaltet sind, dass die Streifen 2e,2f entsprechend umgeformt werden können. Die Erfindung weist somit den Vorteil auf, dass auf einfache Weise die Struktur der Streifen 2e,2f verändern werden kann, indem die Prägeräder 4a,4b,5a,5b ausgewechselt werden.

Fig. 22 zeigt schematisch und dreidimensional die Herstellung einer Wabenstruktur 10, wobei die Wabenstruktur 10 auf einem sich in Förderrichtung 9a bewegenden Förderband 9 aufliegt. Die Wabenstruktur 10 weist eine Anschlagkante 10a auf, welcher auf nicht dargestellte Weise strukturierte Streifen 2e zugeführt und daran angeschlagen werden. Das Zuführen der Streifen 2e könnte mit einer Anschlagvorrichtung 34 wie in den Figuren 10l bis 10o dargestellt erfolgen. Die hergestellte Wabenstruktur 10 weist einen 10f Zwischenraum auf, sowie eine erste Teilwabenstruktur 10g und eine zweite Teilwabenstruktur 10h. Die erste Teilwabenstruktur 10g ist beispielsweise mit Hilfe eines in Figur 10l dargestellten Greifers 35 möglich, indem dieser Greifer 35 den für die ersten Teilwabenstruktur 10g bestimmten strukturierten Streifen 2e an der Anschlagkante 10a des ersten Teilwabenstruktur 10a positioniert, sodass dieser dort angeschlagen werden kann. Das Erzeugen eines Zwischenraumes 10f weist beispielsweise den Vorteil auf, dass eine Sandwichkonstruktion, deren Wabenkern 10 mit einer Deckschicht bedeckt ist, innerhalb des Wabenkerns 10 einen Hohlraum aufweist, nämlich den Zwischenraum 2f.

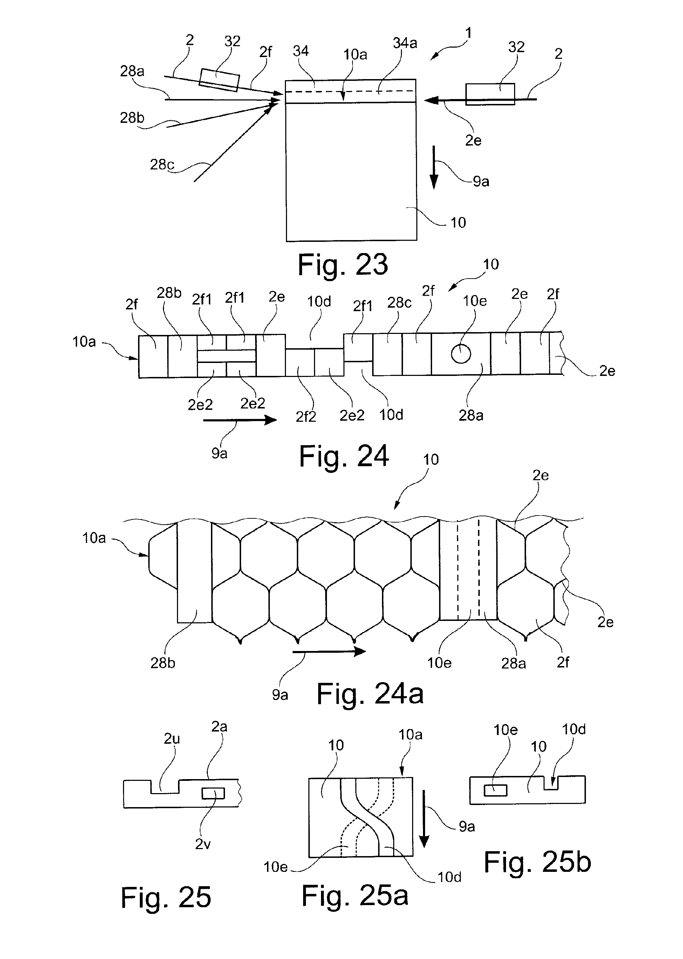

Figur 23 zeigt schematisch ein Ausführungsbeispiel der erfindungsgemässen Herstellungsvorrichtung 1 zum Herstellen einer Wabenstruktur 10. Die Herstellungsvorrichtung 1 umfasst zumindest eine Zuführvorrichtung 32 zum Zuführen eines strukturierten Streifens 2e, und umfasst eine Anschlagvorrichtung 34 um den strukturierten Streifen 2e vor der Anschlagkante 10a zu positionieren und anschliessend mit dem Wabenkern 10 zu verbinden. Die Anschlagvorrichtung 34 bildet einerseits einen Eintragskanal 34a aus, um den strukturierten Streifen 2e ausgehend von der Zuführvorrichtung 32 einzutragen und vor der Anschlagkante 10a zu positionieren. Die Anschlagvorrichtung 34 umfasst zudem Anschlagmittel wie die Stempel 21a,21b, um den strukturierten Streifen 2e mit der Anschlagkante 10a zu verbinden, sodass der Streifen 2e Teil der Wabenstruktur 10 wird. Die erfindungsgemässe Herstellungsvorrichtung 1 hat Ähnlichkeit mit einer Webmaschine. Ein mit einer Webmaschine hergestelltes Gewebe weist Kettfäden und Schussfäden auf, wobei die Schussfäden durch die Kettfäden zusammengehalten werden. In webmaschinentechnischer Terminologie entspricht der einzutragenden strukturierten Streifen 2e einem Schussfaden. Die Funktion der Kettfäden wird bei der erfindungsgemässen Herstellungsvorrichtung 1 beziehungsweise bei der hergestellten Wabenstruktur 10 durch das feste Verbinden des jeweils eingetragenen strukturierten Streifens 2e mit der Wabenstruktur 10 übernommen, wobei diese Verbindung als eine thermoplastische Verbindung, eine duroplastische Verbindung oder eine Klebeverbindung ausgestaltet ist. Auf Grund der relativ grossen Ähnlichkeit zwischen der erfindungsgemässe Herstellungsvorrichtung 1 sowie einer Webmaschine, wie zum Beispiel einer Luft- oder Greiferwebmaschine, weist die erfindungsgemässe Herstellungsvorrichtung 1 eine Vielzahl von Eigenschaften auf, wie diese bisher einzig bei Webmaschinen bekannt waren. Ähnlich wie bei Webmaschinen erlaubt es die erfindungsgemässen Herstellungsvorrichtung 1 eine Vielzahl möglicher, auch unterschiedlicher strukturierter Streifen 2e,2f einzutragen, wobei sich die strukturierten Streifen 2e,2f zum Beispiel bezüglich Struktur, Gewicht, Breite B, Farbe oder Material unterscheiden könnten. Nebst strukturierten Streifen 2e,2f können auch eine Vielzahl andere Materialien oder Strukturen 28a,28b,28c eingetragen werden, zum Beispiel ein Kanalelement 28a aufweisend einen Kanal 28, wie in Figur 24 und 24a dargestellt. Die Struktur der erfindungsgemässen Wabenstruktur 10 wird vorzugsweise aus streifenförmigem Material enthaltend Zellulose beziehungsweise Papier gebildet. Falls erforderlich ist es jedoch möglich zusätzliche, andere Materialien in die Wabenstruktur 10 aufzunehmen. In erster Näherung kann davon ausgegangen werden, dass solche Materialien mit der Anschlagkante 10a der Wabenstruktur 10 verbunden werden können, welche sich mit den Anschlagkante 10a der Wabenstruktur 10 fest verbinden lassen, z.B. auch durch Kleben. Sofern die Wabenstruktur 10 jedoch beispielsweise zusätzlich mit der Auflagefläche 9 verbunden ist, indem die Auflagefläche 9 beispielsweise als untere Deckplatte ausgestaltet ist, oder indem die Wabenstruktur 10 zusätzlich mit einer oberen Deckplatte bedeckt wird, so kann diese untere und/oder obere Deckplatte die Funktion von "Kettfäden" zumindest teilweise übernehmen, sodass eingetragene Materialien nicht unbedingt mit über die Anschlagkante 10a der Wabenstruktur 10 verbunden werden müssen. Es wäre somit sogar möglich einen wie in Figur 22 dargestellten Zwischenraumes 10f auszubilden, wobei dieser Zwischenraum 10f, im Unterschied zu der in Figur 22 dargestellten Ausführungsform, senkrecht zur Verschiebungsrichtung 9a verlaufen würde.

Die in Figur 23 dargestellte Herstellungsvorrichtung 1 weist auf beiden Seiten je eine Zuführvorrichtung 32 auf, welche je einen strukturierten Streifen 2e, 2f der Anschlagvorrichtung 34 zuführen kann. Es könnten eine Mehrzahl von Zuführvorrichtungen 32 vorgesehen sein, wobei die einzelnen Zuführvorrichtungen 32 beispielsweise geometrisch unterschiedlich ausgestaltete strukturierte Streifen ausbilden, z.B. strukturierte Streifen unterschiedlicher Breite B. Zudem können auch Zuführvorrichtungen vorgesehen sein um andere Materialien oder anderer Strukturen 28a, 28b, 28c der Anschlagvorrichtung 34 zuzuführen.

Figur 24 zeigt in einer Seitenansicht und Figur 24a in einer Draufsicht eine Auswahl aus einer Vielzahl von Möglichkeiten der Herstellung von Wabenstrukturen 10 mit der erfindungsgemässen Herstellungsvorrichtung 1. Die Verschiebungsrichtung während dem Herstellen der Wabenstruktur 10 erfolgt in Richtung 9a, weshalb der Aufbau der dargestellten Wabenstruktur 10 mit dem zuerst eingetragenen Streifen, dem rechts dargestellten Streifen 2e begonnen wird. Dabei ist zu bemerken, dass im Zusammenhang mit der Beschreibung der Figur 24 und 24a die Bezeichnung "Streifen" verwendet wird, obwohl die Wabenstruktur 10 keine Streifen mehr aufweist, sondern eine Gesamtstruktur ausbildet. Mit dem Begriff "Streifen" wird nachfolgend nur erkläre, wie die Wabenstruktur 10 aufgebaut wurde, wobei die dargestellte Wabenstruktur 10 an sich keine "Streifen" mehr aufweist, da diese fest miteinander verbunden beziehungsweise miteinander verschmolzen oder verschweisst sind. Beginnen von rechts wurde die Wabenstruktur 10 derart erzeugt, dass zuerst ein Streifen 2e und nachfolgend ein Streifen 2f und ein Streifen 2e angeschlagen wurde. Danach wurde ein Durchgangselement 28a angeschlagen, welches einen durchgehenden Kanal 10e aufweist, und welches beispielsweise aus einem Kunststoff oder aus einem Metall besteht. Nachfolgend wurde ein Streifen 2f und nachfolgend ein Metallstreifen 28c eingetragen. Nachfolgend wurde ein schmalerer Streifen 2f1 eingetragen, wobei dieser mit der Wabenstruktur 10 oben bündig angeschlagen wurde, sodass sich unten eine Vertiefung 10d ergibt. Um den schmalen Streifen 2f1 derart anzuschlagen ist es vorgängig erforderlich diesen in horizontaler Richtung genau am Anschlag 27 anzuordnen. Dies kann beispielsweise mit Hilfe der in Figur 10d dargestellten Anordnung derart erfolgen, dass der schmale Streifen 2f1 auf der Auflagefläche 9 aufliegend am Anschlag 27 an den Tiefstellen 27a, Hochstellen 27b und geneigten Stellen 27c anliegt. Daraufhin wird über die Löchern 27d ein Vakuum erzeugt, sodass der schmale Streifen 2f1 fest am Anschlag 27 anliegt. Daraufhin wird der Anschlag 27 in Bewegungsrichtung 27f nach oben bewegt, und daraufhin der schmale Streifen 2f1 beispielsweise wie in Figur 10e dargestellt an die Anschlagkante 10a angeschlagen und somit mit der Wabenstruktur 10 verbunden. An Stelle des Anschlages 27 könnte natürlich auch die Auflagefläche 9 und/oder die Wabenstruktur 10 in vertikaler Richtung verschoben werden, um den Streifen 2f1 bezüglich der Wabenstruktur 10 zu positionieren. Die Verschiebung des Anschlages 27 in Verschiebungsrichtung 27f weist den Vorteil auf, dass ein vom Anschlag 27 gehaltener Streifen 2e schnell und präzise bezüglich der Wabenstruktur 10 positioniert und angeschlagen werden kann. Zurück zur Figur 24 wurde nachfolgend dem schmalen Streifen 2f1 zwei schmale Streifen 2e2 und 2f2 angeschlagen, wobei zum Anschlagen dieser schmalen Streifen 2e2 und 2f2 keine Höhenverstellung des Anschlages 27 erforderlich ist, da diese Schreifen auf der Auflagefläche 9 aufliegen und daher Anschlagkante 10a der Wabenstruktur 10 positioniert sind. Nachfolgend wurde ein Streifen 2e angeschlagen. Nachfolgend wurde vorerst der schmale Streifen 2f1 angeschlagen, auf gleiche Weise wie der vorgängig bereits beschriebene schmale Streifen 2f1. Nachfolgend wurde der schmale Streifen 2e2 auf der Auflagefläche 9 aufliegt eingeführt und ebenfalls, wie in Figur 10e dargestellt, an die Anschlagkante 10a angeschlagen und somit mit der Wabenstruktur 10 verbunden. Im Ausführungsbeispiel gemäss Figur 24 wurde dieser Vorgang wiederholt, danach ein Metallstreifen 28 eingetragen, und danach ein strukturierter Streifen 2f eingetragen, welcher die Anschlagkante 10a ausbildet. Zwischen den Streifen 2f1 und 2e2 wurde ein durchgehender Hohlraum 10e ausgebildet, welcher beispielsweise als ein Kanal verwendet werden kann, zum Beispiel zum Durchführen von Leitungen wie Elektrisch oder Wasser.

Die schmalen Streifen 2f1,2f2 und/oder 2e2 können über eine Zuführvorrichtung 32 zur Verfügung stehen, indem dieser eine Vorratsrolle mit Streifenmaterial 2 dieser schmalen Breite nachgelagert ist. Eine weitere Möglichkeit die schmalen Streifen 2f1, 2f2, 2e2 herzustellen besteht darin das Streifenmaterial 2 mit einer in Figur 1a dargestellten Schneidvorrichtung 23 zu bearbeiten, sodass ausgehend von einem Streifenmaterial 2 mit vorgegebener Breite B schmalere Streifen mit der jeweils erforderliche Breite erzeugt werden könnten.

Mit Hilfe einer Schneid- oder Stanzvorrichtung 23 kann ein Streifenmaterial 2 mit vorgegebener Breite B auf eine Vielzahl von Möglichkeiten verändert werden, um im Streifenmaterial 2 gewünschte ausgeschnittene Stellen 2u oder Durchbrechungen 2v zu erzeugen. Figur 25 zeigt beispielhaft ein unstrukturierten Streifen 2, 2a mit einer ausgeschnittenen Stelle 2u sowie einer Durchbrechung 2v. Figur 25a zeigt eine Draufsicht auf eine Wabenstruktur 10, bei welcher die in Figur 25 dargestellten unstrukturierten Streifen 2a verwendet wurde, indem diese nachfolgend der Umformvorrichtung 32 zugeführt wurden und danach als strukturierte Streifen 2e der Anschlagvorrichtung 34 zugeführt wurden und an die Anschlagkante 10a der Wabenstruktur 10 angeschlagen wurden. Falls alle unstrukturierten Streifen 2a mit identisch angeordneten ausgeschnittenen Stellen 2u und/oder Durchbrechungen 2v erzeugt würden, dann würden diese in Figur 25a genau in Verlaufsrichtung 9a verlaufen. Im Ausführungsbeispiel gemäss Figur 25a wurde die Lage der ausgeschnittenen Stelle 2u sowie der Durchbrechung 2v derart nacheinander folgend verändert, dass sich in der Wabenstruktur 10 der dargestellte Verlauf der ausgeschnittenen Stelle 2u beziehungsweise die Durchbrechung 2v ausbildet. Figur 25b zeigt eine Stirnansicht der in Figur 25a dargestellten Wabenstruktur 10. Figur 26b zeigt einen Ausschnitt der Umformvorrichtung 4, nämlich das Ineinandergreifen von Zähnen 4c des ersten und zweiten Prägerades 4a, 4b, um dadurch den unstrukturierten Streifen 2c in einen strukturierten halbwabenförmigen Streifen 2e zu formen. In einer besonders vorteilhaften Ausgestaltung ist die Oberfläche der Zähne 4c in Umfangsrichtung der Prägeräder 4a,4b derart verlaufend ausgestaltet, dass sich während dem Abrollen der Prägeräder 4a,4b eine linien- oder flächenförmige Anpressstelle 4p ergibt, welche kontinuierlich entlang des unstrukturierten Streifens 2c verläuft, wie dies in Figur 26f dargestellt ist. In einer besonders vorteilhaften Ausgestaltung befindet sich die Übergangsstelle zwischen unstrukturiertem Streifen 2c und strukturiertem Streifen 2e an der Anpressstelle 4p. In einer bevorzugten Ausgestaltung ist die Anpressstelle 4p in Umfangsrichtung der Prägeräder 4a,4b relativ kurz, und weist vorzugsweise eine Länge 4u zwischen 1 mm und 10 mm auf. Je kürzer die Länge 4u der Anpressstelle 4p ist, um so höher ist die an der Anpressstelle 4p auf den Streifen 2c,2e bewirkte Flächenpressung. Eine hohe Flächenpressung ergibt den Vorteil, dass das zu einem Duropalst vernetzende Bindemittel gut in das Streifenmaterial 2 hineingepresst wird, und dass während der Polykondensation frei gesetzte Kondensationsprodukte aus dem Streifenmaterial 2 hinausgepresst werden. Die Flächenpressung weist beispielsweise einen Druck im Bereich zwischen 10 bis 300 Bar auf, insbesondere von etwa 20 Bar.

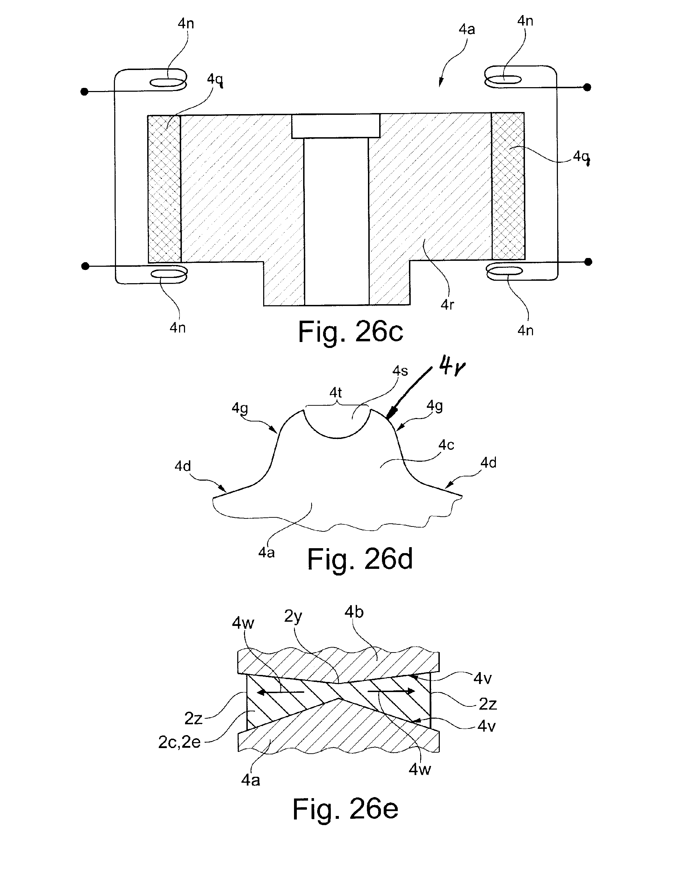

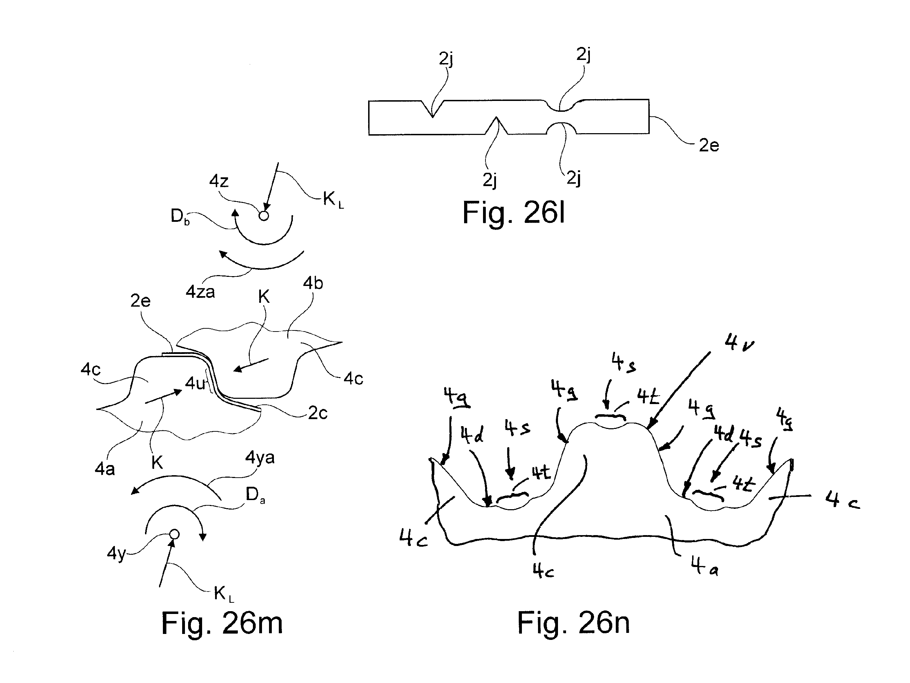

Figur 26 zeigt in einer Seitenansicht ein erstes Prägerad 4a, dessen äusserer Teil 4q aus einem ferromagnetischem Material besteht, und dessen innerer Teil 4r auf einem nicht ferromegnetischen Material oder einem elektrisch nicht leitenden Material besteht. Figur 26a zeigt das in Figur 26 dargestellte erste Prägerad 4a in dreidimensionaler Ansicht. Figur 26c zeigt einen Schnitt durch das erste Prägerad 4a entlang der Schnittlinie C-C, wobei insbesondere der äussere Teil 4q und der innere Teil 4r ersichtlich ist. In Verlaufsrichtung des äusseren Teil 4q sowie beabstandet zur Prägerad 4a sind beidseitig je eine Induktionsvorrichtung 4n angeordnet, welche im dargestellten Ausführungsbeispiel als Helmholzspulen ausgebildet sind. Diese Induktionsvorrichtung 4n bildet zusammen mit dem äusseren Teil 4q eine Induktionsheizung, wobei die im äusseren Teil 4q erzeugte Wärme über den den Helmholzspulen zugeführten Strom und die Frequenz ansteuerbar ist. In einer vorteilhaften Ausgestaltung besteht der innere Teil 4a aus einem gut Wärme leitenden Material, sodass die im äusseren Teil 4q erzeugte Wärme auch wieder schnell abführbar ist. Es kann sich als vorteilhaft erweisen zudem eine Kühlvorrichtung vorzusehen, zum Beispiel ein neben dem Prägerad 4a angeordneten Ventilator. Die in Figur 26c dargestellte Anordnung erlaubt ein schnelles und sehr präzises Heizen des äusseren Teils 4q beziehungsweise ein sehr schnelles und sehr präzises Erwärmen oder auch abkühlen des sich zwischen den Prägerädern 4a,4b befindlichen Streifens 2c,2e. Sofern das Prägerad 4a zusätzlich mit einer Kühlvorrichtung versehen ist kann die Erwärmung beziehungsweise eine Kühlung des Streifens 2c,2e noch genauer erfolgen. Die Temperatur ist nebst dem Druck der wichtigste Parameter zur Beeinflussung der im Streifen 2c,2e ablaufenden chemischen Reaktion, welche auf Grund der Polykondensation stattfindet. Die Temperatur wird vorzugsweise derart geregelt, dass der sich im Prägerad 4a,4b befindliche Streifen 2c,2e eine Temperatur im Bereich zwischen 120 °C und 280 °C aufweist.

Figur 26d zeigt in einer Seitenansicht ein weiteres Ausführungsbeispiel einer besonders vorteilhaften Ausgestaltung eines Prägezahns 4c des Prägerades 4a. Im Unterschied zu den in Figur 26 oder 26b dargestellten Prägezähnen 4c weist der in Figur 26d dargestellte Prägezahn 4c eine Vertiefung 4s aus, welche in Umfangsrichtung eine Länge 4t aufweist. In einer besonders vorteilhaften Ausgestaltung eines Prägerades 4a weist jeder Prägezahn 4c eine Vertiefung 4s mit derselben Länge 4t auf, wobei die geometrische Form der Vertiefung 4s von untergeordneter Bedeutung ist. Die Vertiefung 4s hat zur Folge, dass sich während dem Abrollen der Prägeräder 4a in Verlaufsrichtung des Streifens 2c,2e abschnittweise keine Druckstelle 4p ausbildet, überall dort, wo die Vertiefung 4s des einen Prägerades 4a,4b an das gegenüberliegende Prägerad 4b,4a zu liegen kommt, sodass sich in diesem Abschnitt kein oder nur ein sehr geringer Druck auf den Streifens 2c,2e einwirkt. In Figur 6c sind in einem möglichen Ausführungsbeispiel solche Abschnitte mit 2x bezeichnet. Falls der Aussenteil 4q beheizt ist hat dies zudem zur Folge, dass der Streifen 2c,2e im Abschnitt der Länge 4t beziehungsweise im Abschnitt 2x einer tieferen Temperatur ausgesetzt ist, da der Streifen 2c,2e an dieser Stelle weniger erwärmt wird. Dies hat zur Folgen, dass die Vernetzung beziehungsweise die im Streifen 2c,2e ablaufende chemische Reaktion nicht oder weniger schnell erfolgt. Somit kann ein strukturierter Streifen 2e hergestellt werden, der in Verlaufsrichtung Abschnitte mit unterschiedlich vernetztem Bindemittel aufweist, zum Beispiel Abschnitte wie beispielsweise die Seitenflächen 2k, in welchen das Bindemittel zu Duroplast vernetzt ist, und Abschnitte wie die Abschnitte 2x, in welchen das Bindemittel noch nicht oder erst teilweise zu Duroplast vernetzt ist. Solche Abschnitte 2x werden hierin auch als Kontaktabschnitte 2h,2i bezeichnet. Ein derartiger strukturierter halbwabenförmiger Streifen 2e lässt sich besonders vorteilhaft an der Anschlagkante 10a mit der Wabenstruktur 10 verbinden, da, wie in Figur 10e dargestellt, die sich zwischen dem Anschlag 27 und dem Stempel 21a befindlichen Abschnitte dem Abschnitt 2x gemäss Figur 6c entsprechen. In einer besonders bevorzugten Ausgestaltung werden die Stempel 21 a und der Anschlag 27 erwärmt, vorzugsweise ebenfalls mit einer Induktionsheizung. Zudem wird vorzugsweise über den Stempel 21a ein Druck auf dies sich zwischen dem Anschlag 27 und dem Stempel 21a befindlichen Abschnitte ausgeübt, sodass die Polykondensation und/oder die Vernetzung des Bindemittels zu Duroplast erfolgt und die beiden sich zwischen Anschlag 27 und Stempel 21a befindlichen Abschnitte sich gegenseitig gut verbinden, beziehungsweise miteinander verschweisst werden und eine duroplastische Verbindung ausbilden. Dies ergibt eine besonders vorteilhafte Verbindung, sodass der zugeführte strukturierte Streifen 2e zu einem Bestandteil der Wabenstruktur 10 wird.

Figur 26n zeigt in einer Seitenansicht ein weiteres Ausführungsbeispiel einer besonders vorteilhaften Ausgestaltung von drei in Umfangsrichtung nacheinander folgenden Prägezähnen 4c eines Prägerades 4a. Alle Prägezähne 4c weisen die bereits in Figur 26d beschriebene Vertiefung 4s der Länge 4t auf. Zudem weisen die Vertiefungen 4d zwischen den Prägezähnen 4c dieselben Vertiefungen 4s der Länge 4t auf wie die Prägezähne 4c. Diese Ausgestaltung hat bei zwei gegenseitig ineinander greifenden Prägerädern 4a zur Folge, dass auf das sich dazwischen befindliche Streifenmaterial 2 entlang der Länge 4t kein Druck ausgeübt wird, und das Streifenmaterial 2 keine oder eine geringe oder reduzierte Erwärmung erfährt, da das Streifenmaterial 2 entlang dieses Abschnittes nicht direkt mit den Prägerädern 4a in Kontakt kommt. Dies ermöglicht im Streifenmaterial 2 Kontaktabschnitte 2h,2i zu erzeugen, entlang denen die Kondensationsreaktion nicht oder nur teilweise erfolgt ist.

Figur 27 zeigt in einer Seitenansicht schematisch eine Umformvorrichtung 4 umfassend ein erstes Prägerad 4a welches an einer Nabe 4k gelagert ist und welches von einer Antriebsvorrichtung 4h, z.B. einem Elektromotor, angetrieben ist. Ein zweites Prägerad 4b ist an einer Nabe 41 gelagert, und ist von einer Antriebsvorrichtung 4i, z.B. einem Elektromotor, angetrieben. Die beiden Prägeräder 4a,4b greifen ineinander. In einer vorteilhaften Ausgestaltung sind die beiden Naben 4k, 41 über eine Druckerzeugungsvorrichtung 4m, vorzugsweise über eine elektrisch ansteuerbare Druckerzeugungsvorrichtung 4m miteinander verbunden, um durch eine entsprechende Ansteuerung dieser Druckerzeugungsvorrichtung 4m eine Kraft K_{L} zu erzeugen, und um die auf den Streifen 2c,2e bewirkte Presskraft an der in Figur 26b dargestellten Druckstelle 4p zu bewirken. In einer möglichen Ausgestaltung sind zumindest die Antriebsvorrichtungen 4h, 4i von einer Regelungsvorrichtung 30 ansteuerbar, um die Drehzahl, sowie das Erhöhen und Reduzieren der Drehzahl und/oder das Drehmoment Da, Db um die Drehachsen 4y,4z anzusteuern. In einer weiteren vorteilhaften Ausgestaltung ist zudem zumindest an einem der Prägeräder 4a,4b eine Induktionsvorrichtung 4n angeordnet, um die Prägeräder 4a,4b wie in Figur 26c beschrieben zu erwärmen. Die Induktionsvorrichtung 4n ist vorzugsweise ebenfalls von der Regelvorrichtung 30 ansteuerbar, wobei insbesondere auch noch nicht dargestellte Temperatursensoren mit der Regelvorrichtung 30 verbunden sein könnten, wobei diese Temperatursensoren z.B. die Temperatur der Prägeräder 4a,4b oder die Temperatur der Streifen 2c,2e erfassen, um derart mit Hilfe der Induktionsvorrichtung 4n eine ansteuerbare Induktionsheizung auszubilden, welche es ermöglichst die Erwärmung des Streifens 2c,2e genau zu steuern. In einer weiteren mögliche Ausgestaltung könnten zudem noch Kühlvorrichtungen 4o vorgesehen sein, insbesondere auch ansteuerbare Kühlvorrichtungen 4o, um die Prägeräder 4a.4b auch zu kühlen, vorzugsweise über die Regelvorrichtung 30 zu kühlen.

In einer besonders vorteilhaften Ausgestaltung ist die Umformvorrichtung 4 derart ausgestaltet, dass die Prägeräder 4a,4b ersetzt werden können, zum Beispiel durch Prägeräder 4a,4 b mit demselben Durchmesser aber einer anderen Breite D und/oder Prägeräder 4a,4b mit anders angeordneten oder geometrisch anders ausgestalteten Zähnen, wie z.B. in den Figuren 5a und 5b dargestellt, und/oder Prägeräder 4a,4b mit einem grösseren oder kleineren Durchmesser. In einer besonders vorteilhaften Ausgestaltung ist die Umform- und Zuführvorrichtung 32 sowie die Anschlagvorrichtung 34 derart ausgestaltet, dass diese eine Maximalbreite B eines Streifens 2c,2e sowie schmalere Streifen 2c,2e verarbeiten könnten, zum Beispiel indem die Höhe des Anschlages 27 zur Verarbeitung eines Streifens mit Maximalbreite B ausgestaltet ist. Die erfindungsgemässe Herstellungsvorrichtung 1 weist somit den Vorteil auf, dass die Streifen 2c,2e, welche mit derselben Herstellungsvorrichtung 1 verarbeitet werden könnten, eine beliebige Breite unterhalb der Maximalbreite B aufweisen können. Die mit der Umformvorrichtung 4 erzeugte Struktur eines strukturierten Streifens 2e kann auf einfache Weise durch einen Austausch der beiden Prägeräder 4a,4b verändert werden. Die erfindungsgemässe Herstellungsvorrichtung 1 ist daher ausserordentlich flexibel, weil in einer vorteilhaften Ausführungsform einzig die Prägeräder 4a,4b auszutauschen sind, um unterschiedlichste Wabenstrukturen 10 zu bilden. Sofern eine Schneidvorrichtung 23 verwendet wird kann die Breite B der Streifen 2e über die Schneidvorrichtung 23 bestimmt werden. Um allenfalls Schneidabfälle zu vermeiden kann es sich jedoch als vorteilhaft erweisen mit dem Austausch der Prägeräder 4a,4b auch das Streifenmaterial 2 auszutauschen, um ein Streifenmaterial geeigneter Breite zu verwenden, sodass kein Schneiden erforderlich ist.

Figur 26e zeigt eine Teilansicht eines Schnitts durch die beiden Prägeräder4a,4b mit dazwischen angeordnetem Streifen 2c,2e, wobei an dieser Stelle der Übergang zwischen dem unstrukturierten Streifen 2c und dem strukturierten Streifen 2e stattfindet. Die Oberfläche 4v ist im dargestellten Ausführungsbeispiel V-förmig verlaufend ausgestaltet, sodass im Mittenbereich 2y des Streifens 2c,2e ein höherer Druck erzeugt wird wie im Randbereich 2z des Streifens 2c,2e. Der V-förmige Verlauf der Oberfläche 4v ist zur besseren Sichtbarkeit überzeichnet dargestellt, wobei der Mittenbereich 2y in einer vorteilhaften Ausgestaltung zum Beispiel 0,1 mm bis 1 mm bezüglich dem Randbereich des ersten und/oder zweiten Prägerades 4a,4b vorsteht. Dies bewirkt eine zum Randbereich 2z hin ausgerichtete Auspresskraft 4w, mit welcher zum Beispiel die während der Polykondensation frei gesetzten Kondensationsprodukte aus dem Streifenmaterial 2 in Richtung Randbereich 2z hinausgepresst werden. Die Oberfläche 4v kann in einer Vielzahl von Möglichkeiten verlaufend ausgestaltet sein, um eine zum Randbereich 2z hin ausgerichtete Auspresskraft 4w zu erzeugen.

Figur 26f zeigt eine Draufsicht auf den unstrukturierten Streifen 2c und den strukturierten Streifen 2e, mit der Druckstelle 4p, welche eine Länge 4u aufweist, und welche sich in Verlaufsrichtung des Streifens 2c,2e bewegt. Zudem ist der Mittenbereich 2y des Streifens 2c,2e sowie der Randbereich 2z dargestellt. Die Druckstelle 4p weist vorteilhafterweise eine Länge 4u zwischen 1 mm und 10 mm auf. Figur 26g zeigt eine Teilansicht eines Schnitts durch ein Prägerad 4a. Die Oberfläche 4v ist ähnlich verlaufend ausgestaltet wie in Figur 26e dargestellt, wobei die Oberfläche 4v wie dargestellt zudem eine strukturierte Oberfläche wie zum Beispiel eine Mikrostruktur aufweist, um eine ungleichmässige Kraft auf den Streifen 2c,2e zu bewirken, und um das Herauspressen von Kondensationsprodukten zu unterstützen. Der im Wesentliche V-förmige Verlauf der Oberfläche 4r ist zur besseren Sichtbarkeit überzeichnet dargestellt, wobei der Mittenbereich in einer vorteilhaften Ausgestaltung zum Beispiel 0,1 mm bis 1 mm bezüglich dem Randbereich des ersten und/oder zweiten Prägerades 4a,4b vorsteht.

Figur 26h zeigt eine Teilansicht einer Draufsicht auf die Oberfläche 4d,4g eines Prägerades 4a, z.B. wie in Figur 26d dargestellt. Die Oberfläche 4v umfasst linienförmig verlaufende Erhebungen 4x, welche in Figur 26i in einem Schnitt entlang der Schnittlinie D-D dargestellt sind, wobei die Höhe der Erhebungen 4x zur besseren Sichtbarkeit überzeichnet dargestellte sind. Die Höhe der Erhebungen 4x liegt, auch abhängig von der Dicke des Streifens 2c, vorteilhafterweise im Bereich zwischen 0,1 mm bis 2 mm. Die Erhebungen 4x verursachen eine Strukturierung beziehungsweise eine Prägung des Streifens 2e, wie dies in Figur 26k dargestellt ist. Die Bereiche 2k weisen solche Vertiefungen 2j auf. Figur 26l zeigt in einem Schnitt durch den Streifen 2e beispielhaft mögliche Vertiefungen 2j. Im dargestellten Ausführungsbeispiel verlaufen die Vertiefungen 2j immer parallel. Die Vertiefungen 2j können jedoch in einer Vielzahl von Möglichkeiten verlaufen. Die Vertiefungen 2j weisen zum Beispiel den Vorteil auf, dass die mechanische Stabilität des duroplastischen, halbwabenförmigen Streifens 2e verbessert werden kann. Die Vertiefungen 2j weisen zum Beispiel auch den Vorteil auf, dass die während der Polykondensation frei gesetzten Kondensationsprodukte besser aus dem Streifenmaterial 2 hinausgepresst werden können. Der halbwabenförmige Streifen 2e kann auf einer Seite oder auf beiden Seiten mit derartigen Vertiefungen 2j beziehungsweise mit einer derartigen Prägung versehen werden. Die Vertiefungen 2j können in Verlaufsrichtung des Streifens 2e kontinuierlich verlaufend angeordnet sein, oder wie in Figur 26k dargestellt nur abschnittsweise.

Figur 26m zeigt schematisch die bereits in Figur 27 dargestellten, an den Prägerädern 4a, 4b auftretenden Kräfte und Momente. Das erste Prägerad 4a ist um das Drehzentrum 4y drehbar gelagert, während das zweite Prägerad 4b um das Drehzentrum 4z drehbar gelagert ist. Die Prägeräder 4a,4b drehen in Drehrichtung 4za bzw. 4zb. Die Antriebsvorrichtungen 4h,4i bewirken ein Drehmoment Da bzw. Db. Die Druckerzeugungsvorrichtung 4m erzeugt eine Kraft K_{L}. Im Wesentlichen die Summe der Kraft K_{L} sowie der Drehmomente Da und Db bewirkt die an der Druckstelle 4p angreifende Kraft K. Die Kraft K kann somit über eines oder beide der Drehmomente Da und Db sowie die Kraft K_{L} von der Regelvorrichtung 30 angesteuert werden.

In einem vorteilhaften Verfahrensschritt wird der halbwabenförmige Streifen 2e,2f, nachdem dieser geformt ist, gekühlt, wobei der halbwabenförmige Streifen 2e,2f während des Kühles insbesondere formstabil gehalten wird.

In einem vorteilhaften Verfahrensschritt wird das Streifenmaterial 2 vor dem Zuführen in die Prägeräder 4a,4b vorerwärmt auf eine Temperatur zwischen 50°C und 120°C.

In einem vorteilhaften Verfahrensschritt wird der auf das Streifenmaterial 2 bewirkte Druck angesteuert indem jedes Prägerades 4a,4b einzeln angetrieben wird und das Drehmoment zumindest eines oder jedes der Prägeräder 4a,4b einzeln angesteuert wird.

In einem vorteilhaften Verfahrensschritt werden die beiden Prägeräder 4a,4b mit einer ansteuerbaren Linearkraft K_{L} gegeneinander gedrückt werden, wobei auf jedes Prägerad 4a,4b ein ansteuerbares Drehmoment Da,Db bewirkt wird, und wobei die Linearkraft K_{L} und die Drehmomente Da,Db derart angesteuert werden, dass zwischen den beiden Prägerädern 4a,4b ein vorherbestimmter Druck resultiert, der auf das Streifenmaterial 2 wirkt.

Figur 28 zeigt eine Aufsicht auf einen unstrukturierten Streifen 2a. Dieser weist ausgeschnittene Stellen 2u auf beziehungsweise vorstehende Laschen 2w. Figur 28a zeigt einen aus dem Streifen 2a gemäss Figur 28 gebildeten strukturierten Streifen 2e in einer Draufsicht, wobei der Streifen 2e auf einer Grundplatte 9 aufliegt, und wobei nur die unteren, vorstehenden, auf der Grundplatte 9 aufliegenden Laschen 2w dargestellt sind. Diese Laschen 2w weisen zum Beispiel den Vorteil auf, dass eine besonders vorteilhafte Verbindung zwischen dem Streifen 2e und der Grundplatten 9 möglich ist.

Figur 29 zeigt in einer Draufsicht und Figur 29a in einer Seitenansicht die Herstellung einer doppelschichtigen Sandwichstruktur 33 aufweisend eine Grundschicht 33a, eine erste Wabenstruktur 33b, 10, eine Zwischenschicht 33c, eine zweite Wabenstruktur 33d, 10 sowie eine Deckschicht 33e. An den Anschlagkanten 10a werden strukturierte Streifen 2e,2f mit Hilfe der Zuführvorrichtung 32 zugeführt und mit Hilfe der Anschlagvorrichtung 34 eingeführt und angeschlagen, wie in Figur 29 dargestellt, sodass die erste und zweite Wabenstruktur 33b,33d ausgebildet wird. Zudem ist an den Achsen 33f, 33h je eine Rolle mit Zwischenschicht 33 und Deckschicht 33e gelagert, sodass diese, wie in Figur 29a dargestellt, auf die entsprechende Wabenstruktur 33b, 33d aufgelegt werden.

Figur 29b zeigt in einer Draufsicht und Figur 29c in einer Seitenansicht die Herstellung einer weiteren doppelschichtigen Sandwichstruktur 33 aufweisend eine Grundschicht 33a, eine erste Wabenstruktur 33b, 10, eine Zwischenschicht 33c, eine zweite Wabenstruktur 33d, 10 sowie eine Deckschicht 33e. An der Anschlagkante 10a wird ein strukturierter Streifen 2e mit Hilfe der Zuführvorrichtung 32 zugeführt und mit Hilfe der Anschlagvorrichtung 34 eingeführt und angeschlagen, wie in Figur 29b dargestellt. Auf die erste Wabenstruktur 33b wird eine Zwischenschicht 33c aufgebracht indem diese oberhalb an einer Achse 33f als Vorratsrolle 33g drehbar gelagert ist. Nach der vollständigen Herstellung der ersten Wabenstruktur 33b und dem Bedecken mit der Zwischenschicht 33c wird daraufhin mit Hilfe einer Zuführvorrichtung 32 ein strukturierter Streifen 2f eingetragen um eine zweite Wabenstruktur 33d auszubilden, wobei der Streifen 2f senkrecht zum strukturierten Streifen 2e verläuft. Somit wird eine Sandwichstruktur 33 ausgebildet mit zwei gegenseitig senkrecht zueinander verlaufenden Wabenstrukturen 33b, 33d. Es ist beispielsweise auch möglich gewisse Streifen 2e wegzulassen, um dadurch eine Vertiefung 10d beziehungsweise ein durchgehender Kanal 10d in der Sandwichstruktur 33 auszubilden.

Figur 29d zeigt in einer Draufsicht eine Verbundstruktur umfassend eine Wabenstruktur 10 mit über Verbindungsstellen 2s verbundenen strukturierten Streifen 2e,2f. Unterhalb der Wabenstruktur 10 ist eine Zwischenschicht 33c angeordnet. Als Abschluss ist rechts ein Verbindungsstreifen 2e3 mit dem rechts angeordneten strukturierten Streifen 2e verbunden.

Figur 29e zeigt die in Figur 29d dargestellten Anordnung entlang der Schnittlinie D-D. Figur 29e zeigt zwei Wabenstrukturen 10, eine ober und eine untere, bestehend aus über Verbindungsstellen 2s verbundenen strukturierten Streifen 2e,2f. Zwischen den Wabenstrukturen 10 ist die Zwischenschicht 33c angeordnet. Die obere und die untere Wabenstruktur 10 ist über den Verbindungsstreifen 2e3 miteinander verbunden. Der Verbindungsstreifen 2e3 ergibt den Vorteil, dass die obere und untere Wabenstruktur 10 in einer definierten Lage gegenseitig gehalten sind. Dies ergibt den Vorteil, dass die Zwischenschicht 33c keine Stützfunktion aufweisen muss und daher z.B. auch als komprimierbares Material wie z.B: ein Isolationsmaterial ausgestaltet sein kann. In einer weiteren vorteilhaften Ausgestaltung weist die in den Figuren 29d und 29e dargestellte Verbundstruktur wie mit dem Verbindungselement 2e4 angedeutet, eine Vielzahl von Verbindungsstreifen 2e3 und/oder Verbindungselementen 2e4 auf, um zwei Wabenstrukturen 10 gegenseitig beabstandet zu halten. Die Verbindungselemente 2e4 können, wie in Figur 29d dargestellt, in Verlaufsrichtung der Streifen 2e,2f relativ kurz ausgestaltet sein. Die Verbindung zwischen dem Verbindungsstreifen 2e3 bzw. den Verbindungselementen 2e4 und dem strukturierten Streifen 2e der oberen und unteren Wabenstruktur 10 könne z.B. ein Klebeverbindung oder eine duroplastische Verbindung sein.

Figur 30 zeigt schematisch eine Maschine 40 zur Herstellung einer duroplastischen Wabenstruktur 10 aus einem Streifenmaterial 2, wobei das Streifenmaterial 2 im Wesentlichen aus einem Fasermaterial, insbesondere aus einer Papierbahn besteht, welches mit einem zu einem Duroplast vernetzenden Bindemittel vorimprägniert ist. Das Streifenmaterial 2 wird einer Vorrichtung 32 zur Herstellung eines duroplastischen, halbwabenförmigen Streifens 2e,2f zugeführt, welche aus dem Streifenmaterial unter Einsatz von Druck und Temperatur einen duroplastischen, halbwabenförmigen Streifen 2e,2f formt. Die duroplastischen, halbwabenförmigen Streifen 2e,2f werden einem Zwischenspeicher 36 zugeführt und anschliessend von einer Zuführvorrichtung 37 und einer Positioniervorrichtung 38 einer Verbindungsvorrichtung 21, 34 zugeführt, welche die duroplastischen, halbwabenförmigen Streifen 2e,2f zu einem Wabenteppich 10 verbinden. Vorteilhafterweise weist der Wabenteppich 10 eine Anschlagkante 10a auf, mit welcher jeweils ein duroplastischer, halbwabenförmiger Streifen 2e,2f verbunden wird, wobei dieser Streifen 2e,2f, welcher nun Teil des Wabenteppichs 10 ist, zudem die Anschlagkante 10a für den nächstfolgenden duroplastischen, halbwabenförmigen Streifen 2e,2f ausbildet. Auf einen Zwischenspeicher 36 könnte auch verzichtet werden, indem die duroplastischen, halbwabenförmigen Streifen 2e,2f nach der Vorrichtung 32 direkt zur Zuführvorrichtung 37 gelangen. Ein weiteres mögliches Verfahren könnte darin bestehen, dass vorerst nur mit einer Vorrichtung 32 die duroplastischen, halbwabenförmigen Streifen 2e,2f hergestellt werden. Diese duroplastischen, halbwabenförmigen Streifen 2e,2f könnten gelagert und falls erforderlich auch an einen anderen Ort transportiert werden, um die Wabenstruktur 10 mit Hilfe der Vorrichtungen 37, 38 und 34 zu einem späteren Zeitpunkt und gegebenenfalls auch an einem anderen Ort herzustellen.

Ein mögliches Verfahren zum kontinuierlichen Herstellen einer Wabenstruktur 10 ist dadurch gekennzeichnet, dass zwei mit einem Polymerwerkstoff oder einem Silikat versehene Streifenmaterialien 2a,2b zu strukturierten Streifen 2e,2f geformt werden; dass die beiden strukturierten Streifen 2e,2f zusammengeführt und miteinander zu einer Wabenstruktur 2g verbunden werden, wobei zwischen den beiden strukturierten Streifen 2e,2f eine thermoplastische oder duroplastische Verbindung oder eine Silikatverbindung ausgebildet wird, dass die Wabenstruktur 2g in einer vorbestimmten Länge zu einem Wabenstreifen 13 geschnitten wird, dass der Wabenstreifen 13 eine zum Anschlag an eine Anschlagkante 10a der Wabenstruktur 10 bestimmte Anschlagseite 13b aufweist, dass die Anschlagseite des Wabenstreifens 13 und/oder die Anschlagkante 10a der Wabenstruktur 10 mit einem Klebstoff versehen wird, und dass die Anschlagseite 13b des Wabenstreifens 13 der Anschlagkante 10a der Wabenstruktur 10 zugeführt und mit dieser verklebt wird, sodass der Wabenstreifen 13 Teil der Wabenstruktur 10 bildet, wobei der zuletzt zugeführte und angeklebte Wabenstreifen 13 eine Anschlagkante 10a ausbildet, an welcher der nächst folgende Wabenstreifen 13 angeklebt wird.

In einem weiteren möglichen Verfahren wird das Streifenmaterial 2a,2b mit einem Polymerwerkstoff versehen ist, und das Streifenmaterial 2a,2b vor dem Strukturieren erwärmt.

Eine mögliche Vorrichtung 1 zum kontinuierlichen Herstellen einer Wabenstruktur 10, umfasst eine Zuführung 20 für zumindest zwei Streifenmaterialien 2a,2b, umfasst eine Umformvorrichtung 4, 5 zur Strukturierung jedes Streifenmaterials 2a,2b zu einem strukturierten Streifen 2e,2f, umfasst eine Verbindungsvorrichtung 6 zum gegenseitigen Positionieren und Zusammenführen der beiden strukturierten Streifen 2e,2f zu einer Wabenstruktur 2g, umfasst eine Schneidvorrichtung 7 zum Schneiden der Wabenstruktur 2g zu einem Wabenstreifens 13, umfasst eine Auflagefläche 9 zur Ablage des Wabenstreifens 13, umfasst eine Klebemittelzuführungsvorrichtung 12 zum Versehen einer Anschlagseite 13b des Wabenstreifens 13 und/oder einer Anschlagkante 10a der Wabenstruktur 10 mit einem Klebemittel, sowie umfasst eine Zuführungsvorrichtung 17 um den Wabenstreifen 13 mit dessen Anschlagseite 13b der Anschlagkante 10a der Wabenstruktur 10 zuzuführen, um dadurch den Wabenstreifen 13 mit der Wabenstruktur 10 zu verkleben.

Eine mögliche Wabenstruktur umfasst eine Vielzahl von Wabenstreifen, wobei jeder Wabenstreifen aus zwei Streifen umfassend Kontaktabschnitte besteht, und wobei gegenüber liegende Kontaktabschnitte der zwei Streifen unter Ausbildung einer thermoplastischen Verbindung, einer duroplastischen Verbindung oder einer Silikatverbindung gegenseitig verbunden sind, und wobei jeder Wabenstreifen jeweils eine Anschlagkante 10a und eine Klebefläche 13b aufweist, und wobei jeweils eine Anschlagkante 10a und eine Klebefläche 13b von zwei benachbart angeordneten Wabenstreifen 13 über eine Klebeverbindung 22 fest miteinander verbunden sind.

In einer vorteilhaften Ausgestaltung umfasst die Vorrichtung 1 zum Herstellen einer Wabenstruktur 10 aus Streifenmaterial 2 eine Zuführ- und Umformvorrichtung 32 welche aus dem Streifenmaterial 2 einen strukturierten Streifen 2e,2f bildet und zudem eine Fördergeschwindigkeit des strukturierten Streifens 2e,2f bestimmt, sowie umfasst eine Anschlagvorrichtung 34 mit einem Eintragskanal 34a, wobei die Anschlagvorrichtung 34 der Umformvorrichtung 32 derart nachgelagert angeordnet ist, dass der strukturierte Streifen 2e,2f dem Eintragskanal 34a zuführbar ist, und wobei die Wabenstruktur 10 eine Anschlagkante 10a aufweist, welche parallel zum Eintragskanal 34a verläuft, und wobei die Anschlagvorrichtung 34 einen Anschlag 27 und Anschlagmittel 21a,21b umfasst, welche derart beweglich ausgestaltet sind, dass der strukturierte Streifen 2e,2f mit einer Anschlagkante 10a der Wabenstruktur 10 verbindbar ist.

Vorteilhafterweise umfasst die Zuführ- und Umformvorrichtung 32 ein erstes und ein zweites Prägerad 4a,4b mit gegenseitig ineinander greifenden Prägezähnen 4c, wobei das erste und zweite Prägerad 4a,4b derart gegenseitig angepasst ausgestaltet sind, dass das Streifenmaterial 2 zwischen dem ersten und zweiten Prägerad 4a,4b verlaufend angeordnet werden kann und währen dem Rotieren des ersten und zweiten Prägerad 4a,4b zu dem strukturierten Streifen 2e,2f formbar ist, wobei die Drehzahl des ersten und zweiten Prägerades 4a,4b zudem die Fördergeschwindigkeit des strukturierten Streifens 2e,2f bestimmt.

Der der Anschlag 27 und die Anschlagmittel 21a, 21b sind vorzugsweise derart beweglich ausgestaltet sind, dass der Anschlag 27 und die Anschlagmittel 21a, 21b den strukturierte Streifen 2e,2f und die Anschlagkante 10a von je einer Seite umfassen, sodass der strukturierte Streifen 2e,2f und die Anschlagkante 10a gegeneinander pressbar sind.

In einer vorteilhaften Ausgestaltung sind die Prägeräder 4a,4b in Umfangsrichtung derart verlaufend ausgestaltet, dass der strukturierte Streifen 2e,2f nur bogenförmig verlaufende Umlenkungen 2m jedoch keine Knickstellen aufweist.

In einer vorteilhaften Ausgestaltung sind das erste und zweite Prägerad 4a,4b austauschbar angeordnet, wobei eine Mehrzahl von Sätzen eines ersten und zweiten Prägerades 4a,4b zur Verfügung stehen, wobei mit jedem Satz eines ersten und zweiten Prägerades 4a,4b ein anders strukturierter Streifen 2e,2f erzeugbar ist.

In einer vorteilhaften Ausgestaltung sind entlang des Eintragskanals 34a Luftdüsen und/oder Auslassöffnungen 27h für ein gasförmiges Fluid angeordnet sind, welche derart ausgerichtet sind, dass diese den Eintrag des strukturierten Streifens 2e,2f in den Eintragskanal 34a unterstützen.

In einer vorteilhaften Ausgestaltung wird mit einer Regelungsvorrichtung 30 zumindest die Drehzahl der Prägeräder 4a,4b sowie die Erwärmungsvorrichtung 3 und/oder die Induktionsvorrichtung 4n derart ansteuert, dass der strukturierte Streifen 2e,2f in der Zuführ- und Umformvorrichtung 32 eine vorherbestimmte Temperatur aufweist.

In einer vorteilhaften Ausgestaltung ist den Prägerädern 4a,4b eine ansteuerbare Schneidvorrichtung 7 nachgeordnet, welche den strukturierten Streifen 2e,2f insbesondere derart schneidet, dass die Länge des strukturierten Streifens 2e,2f im Wesentlichen der Breite der Wabenstruktur 10 entspricht.

In einer vorteilhaften Ausgestaltung ist zwischen den Prägerädern 4a,4b und dem Eintragskanal 34a ein Speicher 36 angeordnet zum vorübergehenden Speichern des von den Prägerädern 4a,4b zugeförderten strukturierten Streifens 2e,2f.

In einem vorteilhaften Verfahren zum Herstellen einer Wabenstruktur 10 aus Streifenmaterial 2 wird das Streifenmaterial 2 zu einem strukturierten Streifen 2e,2f geformt, wobei der strukturierte Streifen 2e,2f einer Anschlagkante 10a einer Wabenstruktur 10 zugeführt wird, und wobei der strukturierte Streifen 2e,2f mit der Anschlagkante 10a verbunden wird, sodass der strukturierte Streifen 2e,2f ein Teil der Wabenstruktur 10 wird.

In einem vorteilhaften Verfahrenschritt werden die Prägeräder derart schnell rotiert, dass das Streifenmaterial 2 und/oder die Prägeräder 4a,4b derart erwärmt werden, dass die strukturierten Streifen 2e,2f zwischen den Prägerädern 4a,4b oder nach dem Verlassen der Prägeräder 4a,4b eine vorherbestimmte Temperatur aufweisen.

In einem vorteilhaften Verfahrenschritt wird durch die Rotationsgeschwindigkeit der Prägeräder 4a,4b die Fördergeschwindigkeit des strukturierten Streifens 2e,2f bestimmt.

In einem vorteilhaften Verfahrensschritt werden im strukturierten Streifen 2e,2f Abschnitte 2x erzeugt, auf welche die Prägeräder 4a,4b keine oder eine reduzierter Presskraft ausgeübt haben. In einem vorteilhaften Verfahrensschritt wird der strukturierte Streifen 2e,2f synchron zur Drehzahl der Prägeräder 4a,4b der Anschlagkante 10a der Wabenstruktur 10 zugeführt.

In einem weiteren vorteilhaften Verfahrenschritt werden die Prägeräder 4a,4b kontinuierlich betrieben.

In einem weiteren vorteilhaften Verfahrensschritt wird der strukturierte Streifen 2e,2f geschnitten, wobei der nach dem Schneiden von den Prägerädern 4a,4b zugeförderte strukturierte Streifen 2e,2f zwischengespeichert wird zumindest bis der sich vorgängig im Eintragskanal 34a befindliche strukturierte Streifen 2e,2f aus dem Eintragskanal 34a entfernt ist, und wobei der nachfolgende, teilweise gespeicherte strukturierte Streifen 2e,2f danach in den Eintragkanal 34a eingeführt wird.

Eine Maschine zur Herstellung einer duroplastischen Wabenstruktur 10 aus einer Vielzahl von duroplastischen, halbwabenförmigen Streifen 2e,2f, umfasst in einer vorteilhaften Ausgestaltung eine Zuführvorrichtung 37für halbwabenförmige Streifen 2e,2f, umfasst eine Positioniervorrichtung 38, um einen zugeführten halbwabenförmigen Streifen 2e,2f an Verbindungsstellen 2s bezüglich einer Anschlagkante 10a einer Wabenstruktur 10 zu positionieren, und umfasst eine Verbindungsvorrichtung 21, 34 zum Verbinden des zugeführten halbwabenförmigen Streifen 2e,2f an Verbindungsstellen 2s mit der Wabenstruktur 10.

Die Verbindungsvorrichtung 34 umfasst vorteilhafterweise zudem eine Mehrzahl von Stempeln 21a aufweist, welche beheizbar sind und einen Druck erzeugen, wobei die Stemple 21a derart bezüglich einem zugeführten halbwabenförmigen Streifen 2e,2f und der Anschlagkante 10a der Wabenstruktur 10 angeordnet sind, dass die Stempel 21a an deren Verbindungsstellen 2s einwirken um an der Verbindungsstelle 2s eine Vernetzung des Bindemittels zum Duroplast zu bewirken.

## Patentansprüche

1. Verfahren zur Herstellung eines duroplastischen, halbwabenförmigen Streifens (2e,2f) aus einem Streifenmaterial (2), wobei das Streifenmaterial (2) im Wesentlichen aus einem Fasermaterial, insbesondere einer Papierbahn besteht, welches mit einem zu einem Duroplast vernetzenden Bindemittel vorimprägniert ist, wobei das Streifenmaterial (2) kontinuierlich gefördert wird und dabei erwärmt wird und einem Druck ausgesetzt wird, um eine Kondensationsreaktion zu bewirken, wobei über eine Abrollbewegung ein derartiger Druck auf das kontinuierlich geförderte Streifenmaterial (2) ausgeübt wird, dass das Bindemittel in das Streifenmaterial (2) hinein gepresst wird, und dass während der Polykondensation frei gesetzte Kondensationsprodukte aus dem Streifenmaterial (2) hinaus gepresst werden, indem das Streifenmaterial (2) zwischen zwei ineinander greifenden, beheizten, gegenseitig abrollenden Prägerädern (4a,4b) hindurchgeführt wird, sodass das Streifenmaterial (2) durch die Prägeräder (4a,4b) erwärmt wird, dem Druck ausgesetzt wird und zugleich zu einem halbwabenförmigen Streifen (2e,2f) geformt wird.

2. Verfahren nach Anspruch 1, **dadurch gekennzeichnet, dass** das Streifenmaterial (2) auf eine Temperatur zwischen 120°C und 280°C erwärmt wird und mit einem Druck zwischen 10 Bar und 300 Bar gepresst wird.

3. Verfahren nach einem der vorhergehenden Ansprüche, **dadurch gekennzeichnet, dass** die beiden Prägeräder (4a,4b) eine sich insbesondere kontinuierlich in Verlaufsrichtung des Streifenmaterials (2) bewegende Druckstelle (4p) bewirken, entlang welcher der Druck auf das Streifenmaterial (2) ausgeübt wird, wobei die Druckstelle (4p) in Verlaufsrichtung des Streifenmaterials (2) insbesondere eine Länge (4u) zwischen 1 mm und 10 mm aufweist.

4. Verfahren nach einem der vorhergehenden Ansprüche, **dadurch gekennzeichnet, dass** über die Abrollbewegung ein derartiger Druck auf das Streifenmaterial (2) erzeugt wird, dass der Druck in einem Mittenbereich (2y) des Streifenmaterials (2) höher ist als am Rand (2z) des Streifenmaterials (2).

5. Verfahren nach einem der vorhergehenden Ansprüche, **dadurch gekennzeichnet, dass** die Oberfläche des Streifenmaterials (2) strukturiert wird, sodass der halbwabenförmige Streifen (2e,2f) eine strukturierte Oberfläche aufweist, wobei die strukturierte Oberfläche insbesondere einer Vielzahl linienförmig verlaufender Vertiefungen (2j) umfasst.

6. Verfahren nach einem der vorhergehenden Ansprüche, **dadurch gekennzeichnet, dass** das Streifenmaterial (2) vor dem Zuführen in die Prägeräder (4a,4b) vorerwärmt wird auf eine Temperatur zwischen 50°C und 120°C.

7. Verfahren nach einem der vorhergehenden Ansprüche, **dadurch gekennzeichnet, dass** im Streifenmaterial (2) in dessen Verlaufsrichtung gegenseitig beabstandete Kontaktabschnitte (2h,2i) erzeugt werden, indem das Streifenmaterial (2) entlang des Kontaktabschnittes (2h,2i) einer derart tiefen Temperatur und/oder Druck ausgesetzt wird, dass die Kondensationsreaktion nicht oder nur teilweise bewirkt wird, sodass der halbwabenförmige Streifen (2e,2f) in dessen Verlaufsrichtung gegenseitig beabstandete Kontaktabschnitte (2h,2i) aufweist.

8. Verfahren nach einem der vorhergehenden Ansprüche, **dadurch gekennzeichnet, dass** der auf das Streifenmaterial (2) bewirkte Druck angesteuert wird indem jedes Prägerades (4a,4b) einzeln angetrieben wird und das Drehmoment zumindest eines Prägerades (4a,4b) einzeln angesteuert wird.

9. Verfahren nach Anspruch 8, **dadurch gekennzeichnet, dass** die beiden Prägeräder (4a,4b) mit einer ansteuerbaren Linearkraft (K_{L}) gegeneinander gedrückt werden, dass auf zumindest ein Prägerad (4a,4b) ein ansteuerbares Drehmoment (Da,Db) bewirkt wird, und dass die Linearkraft (K_{L}) und zumindest ein Drehmoment (Da,Db) derart angesteuert werden, dass zwischen den beiden Prägerädern (4a,4b) ein vorherbestimmter Druck resultiert, der auf das Streifenmaterial (2) wirkt.

10. Verfahren nach einem der vorhergehenden Ansprüche, **dadurch gekennzeichnet, dass** durch die Abrollbewegung ein wellenförmig oder abgerundet verlaufender, halbwabenförmiger Streifen (2e,2f) ohne Knickstellen ausgebildet wird.

11. Verfahren nach einem der vorhergehenden Ansprüche, **dadurch gekennzeichnet, dass** die Geschwindigkeit der Kondensationsreaktion durch eine Regelung von Druck, Temperatur und einer Fördergeschwindigkeit des Streifenmaterials (2) beeinflusst wird, vorzugsweise derart, dass der halbwabenförmige Streifen (2e,2f) zwischen 0 Sekunden und 10 Sekunden nach dem Verlassen der Prägeräder (4a,4b) in den duroplastischen Endzustand übergegangen ist.

12. Verfahren nach einem der vorhergehenden Ansprüche, **dadurch gekennzeichnet, dass** das Streifenmaterial (2) zumindest zwei übereinander liegende Teilstreifen (2aa,2ab) umfasst, einen ersten Teilstreifen (2aa) und einen zweiten Teilstreifen (2ab), wobei beide Teilstreifen (2aa,2ab) im Wesentlichen aus einer Fasermaterial bestehen, welche mit einem zu einem Duroplast vernetzenden Bindemittel vorimprägniert sind.

13. Verfahren zur Herstellung einer duroplastischen Wabenstruktur (10) aus halbwabenförmigen Streifen (2e,2f) gemäss einem der vorhergehenden Ansprüche, **dadurch gekennzeichnet, dass** zumindest zwei halbwabenförmige Streifen (2e,2f) unter Ausbildung einer Wabe gegenseitig aneinander liegend angeordnet und miteinander verbunden werden, insbesondere durch Kleben, sodass eine Wabenstruktur ausgebildet wird.

14. Verfahren nach Anspruch 13, **dadurch gekennzeichnet, dass** zwei halbwabenförmige Streifen (2e,2f) derart unter Ausbildung einer Wabe zusammengeführt werden, dass die zwei halbwabenförmigen Streifen (2e,2f) an deren Kontaktabschnitten (2h,2i) gegenseitig anliegend angeordnet werden, und dass jeweils zwei gegenseitig aneinander anliegende Kontaktabschnitte (2h,2i) gemeinsam derart erwärmt werden und einem derartigen Druck ausgesetzt werden, dass an den gegenseitig anliegende Kontaktsabschnitten (2h,2i) eine Polykondensation bewirkt wird, um die zwei strukturierten Streifen (2e,2f) an den gegenseitig anliegenden Kontaktabschnitten (2h,2i) über den ausgebildeten Duroplast miteinander zu verbinden.

15. Duroplastische Wabenstruktur (10) umfassend eine Vielzahl von duroplastischen, halbwabenförmigen Streifen (2e,2f), wobei die Streifen (2e,2f) im Wesentlichen aus einer Fasermaterial mit duroplastischem Matrixwerkstoff bestehen, wobei jeder Streifen (2e,2f) in dessen Verlaufsrichtung nacheinander folgend Kontaktabschnitte (2h,2i) und Übergangsbereiche (2k) aufweist, und wobei aneinander liegende Kontaktabschnitte (2h,2i) zweier benachbarter halbwabenförmiger Streifen (2e,2f) unter Ausbildung einer duroplastischen Verbindung miteinander verbunden sind.

16. Duroplastische Wabenstruktur (10) nach Anspruch 15, **dadurch gekennzeichnet, dass** die Übergangsbereiche (2k) in Verlaufsrichtung des Streifens (2e,2f) derart ausgestaltet sind, dass diese abgerundet verlaufen und ohne Knickstellen in die beidseitig anschliessenden Kontaktabschnitte (2h,2i) übergehen, und dass die Streifen (2e,2f) insbesondere eine strukturierte Oberfläche, insbesondere eine Prägung aufweisen.
